# EUROPÄISCHE PATENTSCHRIFT

(11) **EP 1 602 527 B1**
(45) Veröffentlichungstag und Bekanntmachung des Hinweises auf die Patenterteilung: **28.01.2009**
(21) Anmeldenummer: 05010387.8
(22) Anmeldetag: 12.05.2005
(51) Int. Cl.: B60N 2/48

(54) **Fahrzeugsitz mit einer Kopfstütze**
Vehicle seat with a headrest
Siège automobile avec un appui-tête

(30) Priorität: 14.05.2004 DE 102004024434; 27.12.2004 DE 102004062848
(43) Veröffentlichungstag der Anmeldung: 07.12.2005
(73) Patentinhaber: Alfmeier Präzision AG Baugruppen und Systemlösungen, 91757 Treuchtlingen (DE)
(72) Erfinder: Kraft, Dieter, 91799 Langenaltheim (DE); Hofmockel, Jürgen, 91522 Ansbach (DE)
(74) Vertreter: Mörtel & Höfner

(56) Entgegenhaltungen:
- DE-A1- 19 532 260
- DE-A1-7102004 038 70

## Beschreibung

Die Erfindung betrifft einen Fahrzeugsitz mit einer Kopfstütze, welche mit wenigstens einer Haltestange in wenigstens einem innerhalb der Sitzlehne an einer Tragstruktur fixierten Lager höhenverstellbar geführt ist. Um die Kräfte bei einer Höhenverstellung per Hand oder bei einer fernbetätigten automatische Absenkung beispielsweise einer Fondkopfstütze möglichst gering zu halten, ist es zweckmäßig, die Haltestange im Führungsteil mit Radialspiel zu führen. Andererseits besteht bei einem Spiel zwischen Haltestange und Lager die Gefahr, dass die Kopfstütze beim Fahren wackelt und Klappergeräusche erzeugt. Eine feste Halterung der Kopfstütze in der Sitzlehne erfordert aber andererseits Hilfsmaßnahmen wie Federn oder motorische Antriebe, um die Kopfstütze ferngesteuert in ihre unterste Höhenposition absenken zu können. Bei einer aus DE 195 32 260 C2 bekannten Rücksitzbank ist die Haltestange einer Kopfstütze mit Hilfe einer Druckfeder in Richtung der untersten Höhenposition vorgespannt. Die Feder wird aktiv, wenn eine Arretierung in Form eines in eine Kerbe der Haltestange einrastenden Federbügels fernbetätigt gelöst wird. Problematisch dabei ist, dass ein klapperfreier Sitz der Kopfstütze reibungsbedingt hohe Verstellkräfte erfordert, was eine entsprechende Dimensionierung der Druckfeder erforderlich macht. Dies hat aber wieder den Nachteil, dass der Benutzer beim Anheben der Kopfstütze per Hand nicht nur die Reibungskräfte zwischen Haltestange und Lager sondern zusätzlich die von der Druckfeder nach unten ausgeübte Kraft überwinden muss. Ein weiteres Problem hier und auch bei einer motorischen Absenkung ist, dass die Wirkverbindung zwischen Feder bzw. Antrieb spätesten dann entkoppelt werden muss, wenn die Kopfstütze von der Sitzlehne entfernt wird.

Davon ausgehend ist es die Aufgabe der Erfindung, einen Fahrzeugsitz vorzuschlagen, dessen Kopfstütze so gelagert ist, dass sie im Gebrauchszustand spiel- und damit wackel- und klapperfrei in der Sitzlehne fixiert ist, die sich aber dennoch ohne Zuhilfenahme von Federn oder motorischen Antrieben allein aufgrund ihres Eigengewichtes absenken lässt.

Diese Aufgabe wird nach Anspruch 1 dadurch gelöst, dass ein in der Sitzlehne fixiertes Lager die Haltestange mit Radialspiel umfasst und ein von einem ferngesteuerten Antrieb zwischen einer Fixierstellung und einer Freigabestellung bewegbares Klemmelement vorhanden ist, dass das Klemmelement in der Fixierstellung die Haltestange quer zu ihrer Längsrichtung mit einer Klemmkraft beaufschlagt, wodurch die Haltestange mit einem Umfangsbereich ihrer Umfangsfläche gegen das Lager gedrückt wird und dass das Lager so ausgestaltet ist, dass die mit einer Klemmkraft beaufschlagte Haltestange mit einem quer zur Klemmkraft wirksamen Formschluss im Lager fixiert ist. Bei dieser Ausgestaltung ist ein nahezu reibungsfreies axiales Bewegen, insbesondere Absenken der Kopfstütze dadurch gewährleistet, dass zwischen der Haltestange und einem sie führenden Lager ein allseitiges Radialspiel vorhanden ist. Wenn die Haltestange nicht mit einer Klemmkraft beaufschlagt wird, kann sich die Kopfstütze aufgrund ihres Eigengewichts frei nach unten bewegen. Ein fester und wackelfreie Sitz der Kopfstütze im Gebrauchszustand wird dadurch erreicht, dass das erwähnte allseitige Radialspiel durch einen Klemmmechanismus aufgehoben wird, indem die Haltestange bei Beaufschlagung mit einer Klemmkraft mit einem axial wirksamen Reibschluss in ein Lager gedrückt wird. Der Formschluss zwischen Haltestange und Lager wird vorzugsweise dadurch bewerkstelligt, dass das Lager einen eine Aufnahme bildenden Umfangsbereich aufweist, der die Haltestange formschlüssig aufnimmt. Denkbar wäre auch eine Ausgestaltung, bei welcher das Lager einen sich radial nach innen und sich in eine Ausnehmung der Haltestange hinein erstreckenden Vorsprung aufweist. Trotz des genannten Radialspiels zwischen Lager und Haltestange kommt diese bei ihrer Arbeitsbewegung unvermeidlich mit einem Lager in Berührung, insbesondere wenn die Haltestange z.B. aufgrund von Fertigungstoleranzen von ihrer Sollform und -ausrichtung abweicht. Um die Reibungskräfte möglichst gering zu halten, wird bei einer bevorzugten Ausgestaltung vorgeschlagen, dass eine Aufnahme mit in Umfangsrichtung beabstandeten punkt- oder linienförmigen Berührungsstellen mit der Umfangsfläche der Haltestange zusammenwirkt.

Üblicherweise ist bei einer Kopfstütze eine handbetätigte Arretiereinrichtung zum Fixieren der Kopfstütze in unterschiedlichen Höhenpositionen vorhanden. Um trotz einer solchen Einrichtung eine fernbetätigte Absenkung der Kopfstütze vornehmen zu können, ist bei einer bevorzugten Ausführungsvariante vorgesehen, dass die Arretiereinrichtung mit dem Klemmelement derart bewegungsgekoppelt ist, dass die Arretierung der Haltestange in der Freigabestellung des Klemmelement aufgehoben ist, und dass in der Fixierstellung des Klemmelements eine Lösung der Arretierung und damit die erwähnte Höhenverstellung der Kopfstütze per Hand möglich ist. Die Klemmelemente beaufschlagen dabei die Haltestangen.

Um den Kraftaufwand beim Anheben der Kopfstütze zu reduzieren, ist ein Klemmelement in Fixierrichtung mit einem Federelement, das beispielsweise auch als Gasfeder ausgebildet sein kann, beaufschlagt und in Gegenrichtung von einem Stellantrieb betätigt. Dies hat den Vorteil, dass das Klemmelement permanent und mit nahezu der gleichen Klemmkraft an die Umfangsfläche der Haltestange gedrückt wird, auch wenn diese z.B. toleranzbedingt beim Anhebens der Kopfstütze pendelt. Denkbar ist aber auch eine bidirektionale Bewegungskoppelung zwischen der Arretiereinrichtung und einem Klemmelement. Mit der Lösung der Arretierung per Hand würde dann auch die Klemmung der Haltestange aufgehoben, so dass beim Anheben der Kopfstütze nur deren Eigengewicht zu überwinden wäre.

Bei Kopfstützen, die eine mit der ersten Haltestange verbundene zweite Haltestange aufweisen, ist vorgesehen, dass zumindest eine Haltestange in Querrichtung, d.h. also in einer quer zur Fahrzeuglängsrichtung verlaufenden Richtung von einem Klemmelement beaufschlagt ist. Da beide Haltestangen miteinander bewegungsgekoppelt sind, erfolgt die Aufhebung des Radialspiels zwischen Haltestangen und Lager in einer ersten Ausführungsvariante dadurch, dass beide Haltestangen gleichzeitig in Querrichtung mit Hilfe eines Klemmelements verschoben und in entsprechende Lager mit einem in Fahrzeuglängsrichtung wirksamen Formschluss gedrückt werden. Dabei ist es ausreichend, wenn nur eine Haltestange von einem Klemmelement beaufschlagt wird. Bei einer zweiten Verfahrensvariante wird das zum Absenken der Kopfstütze erforderliche Radialspiel dadurch aufgehoben, dass beide Haltestangen unter Veränderung ihres Abstandes elastisch verformt und dabei in ein ihnen zugeordnetes Lager gedrückt werden. Durch die elastische Verformung werden die Haltestange aus der ursprünglichen parallelen Ausrichtung in eine konvergierende und divergierende Ausrichtung gebracht. Bei Ausführungsvariante, bei denen zumindest eine Haltestange in Querrichtung von einem Klemmelement beaufschlagt wird, ist vorzugsweise vorgesehen, dass in der Fixierstellung zwischen dem Klemmelement und einer Haltstange ein in Fahrzeuglängsrichtung wirksamer Formschluss vorhanden ist. Das Klemmelement übernimmt dabei gleichzeitig die Funktion eines Lagers mit in Fahrzeuglängsrichtung wirksamen Formschluss. Soll beispielsweise bei einer Kopfstütze mit zwei Haltestangen eine DreiPunkt-Lagerung vorgesehen werden, so kann es schon ausreichend sein, wenn ein Klemmelement mit Lagerfunktion und für jede Haltestange jeweils noch ein Lager der oben beschriebenen Art vorhanden ist. Der Formschluss zwischen Haltestange und Klemmelement wird vorzugsweise dadurch bewerkstelligt, dass die mit der Umfangsfläche der Haltestange zusammenwirkende Fläche konkav gekrümmt ist, wodurch eine Aufnahme für die Haltestange gebildet ist.

Bei einer Ausführungsform, bei der lediglich eine Haltestange mit einem Klemmelement beaufschlagt wird, ist vorgesehen, dass der Antrieb eine das Klemmelement in Fixierrichtung beaufschlagendes Federelement und einen entgegen gerichteten, dass Klemmelement in seine Freigabestellung bewegenden Stellantrieb umfasst. Ein solcher Antrieb lässt sich leicht zwischen die beiden Haltestangen in der Sitzlehne unterbringen, wobei die Bauhöhe in Fahrtrichtung relativ gering gehalten werden kann, was insbesondere dann der Fall ist, wenn als Federelement eine Blattfeder verwendet wird, deren eines Ende ortsfest fixiert und deren anderes Ende mit dem Klemmelement verbunden ist. Als Stellantrieb ist ein an einer Flachseite der Blattfeder angeordnetes Luftkissen mit steuerbaren Befüllungsgrad vorgesehen, mit welchem die Krümmung der Blattfeder veränderbar ist. Vorteil des genannten Antriebs ist auch, dass er nur aus zwei einfach herzustellenden und auf Dauer zuverlässig arbeitenden Bauteile, nämlich der Blattfeder und dem Luftkissen besteht. Als ein wenig Bauraum erfordernder und daher leicht zwischen die beiden Haltestangen zu positionierender Stellantrieb kommt auch an ein in Fixierrichtung federbelasteter Membranzylinder, eine sogenannten Pneumatikdose in Frage.

Bei einer weiteren bevorzugten Ausführungsvariante ist jeder Haltestange ein Klemmelement zugeordnet, wobei die Haltestangen in der Fixierstellung in gegensinnigen Richtungen von einer Klemmkraft beaufschlagt sind. Die Klemmelemente und ein ihnen zugeordneter gemeinsamer Stellantrieb sind dabei vorzugsweise zwischen den Haltestangen angeordnet, d.h. die Haltestangen werden unter Aufweitung ihrer Spurweite in Querrichtung voneinander weggebogen und jeweils in ein Lager gedrückt. Dieses Lager gewährleistet einen quer zur Klemmkraft, d.h. also in Fahrzeuglängsrichtung wirksamen Formschluss. Vorteilhaft dieser Klemmbeaufschlagung ist, dass bei fehlender Klemmkraftbeaufschlagung die Haltestangen in ihre ursprüngliche parallele Ausrichtung zurückfedern, wodurch dass ursprüngliche Radialspiel zwischen ihnen und den Lagern bzw. den Klemmelementen wieder hergestellt wird, somit ein nahezu reibungsfreies Absenken der Kopfstütze erfolgen kann. Zur Verringerung der Antriebskraft für die beiden Klemmelemente ist vorgesehen, dass diese über ein Kniehebegetriebe mit einem Stellantrieb verbunden sind.

Bei den bisher beschriebenen Ausführungsbeispielen erfolgte die Klemmung der Haltestangen in Querrichtung. Bei einem weiteren bevorzugten Ausführungsbeispiel wird eine Haltestange mit einer Klemmkraft in Fahrtrichtung beaufschlagt. Die Haltestange ist an einem oberen und einer unteren Lager geführt, wobei sie an einer unterhalb der beiden Lager gelegenen Stelle mit einer Klemmkraft beaufschlagt sind. Die Haltestange wird dabei mit einem in Fahrtrichtung weisenden Umfangsbereich in eine Aufnahme des unteren Lagers und mit einem gegen die Fahrtrichtung weisenden Umfangsbereich in eine Aufnahme des oberen Lagers gedrückt. Bei Beaufschlagung mit einer Klemmkraft stützt sich somit die Haltestange am unteren Lager nach Art einer Wippe ab, wodurch die Haltestange in das obere Lager gedrückt wird. Auf diese Weise ist auch ohne eine elastische Verformung der Haltestange eine ausreichende Fixierung der Kopfstütze in Axialrichtung gewährleistet. Ein spielfreier Sitz in Querrichtung wird dadurch gewährleistet, dass die Lager, wie bei den oben beschriebenen Ausführungsbeispielen, mit der Haltestange formschlüssig zusammenwirken. Dieser Formschluss ist jedoch nur bei einer Haltestange vorgesehen. Bei gegebenenfalls vorhandenen zweiten Haltestange sind die Aufnahmen der Lager so gestaltet, dass sie ein Spiel der Haltestange in Querrichtung ermöglichen. Vorteilhaft dabei ist, dass im Falle eines Parallelitätsfehlers, etwa einer divergierenden Ausrichtung der beiden Haltestangen, die zweite Haltestange während des Anhebens und Absenkens der Kopfstütze in den ihr zugeordneten Lagern eine Seitwärtsbewegung ausführen kann. Ein Parallelitätsfehler der Haltestangen erhöht daher weder bei einer Schwerkraft-Absenkung noch bei einer handbetätigten Höhenverstellung die Reibung bzw. die Verstellkräfte.

Vorzugsweise wird das Spiel in Querrichtung dadurch erreicht, dass die Aufnahmen eine sich in Querrichtung und in Stangenlängsrichtung erstreckende Anschlagfläche aufweisen.

Der in Fahrzeuglängsrichtung zur Verfügung stehende Einbauraum in einer Sitzlehne ist naturgemäß eng bemessen. Bei einer bevorzugten Variante sind daher die Klemmelemente als Hebelarme ausgebildet, die um eine in Querrichtung verlaufende Achse schwenkbar sind und mit ihrem nach unten weisenden Freiende mit einer Haltestange zusammenwirken. Die Hebelarme verlaufen also in Platz sparender Weise in Stangenlängsrichtung. Zur Bewegung der Klemmelemente in ihre Freigabestellung weisen diese einen Ausleger auf, der sich in Fahrtrichtung weg, also in Platz sparender Weise in den zwischen den Haltestangen vorhandenen Raum hinein erstreckt. Die Freienden der Ausleger sind über ein Brückenteil miteinander verbunden, welches von einem Stellantrieb nach unten schwenkbar ist. Der Stellantrieb kann daher ebenfalls mit geringem Platzbedarf in Fahrzeuglängsrichtung in der Sitzlehne untergebracht werden.

Die Erfindung wird nun anhand von in den beigefügten Zeichnungen dargestellten Ausführungsbeispiele näher erläutert. Es zeigen:
- Fig. 1: ein erstes Ausführungsbeispiel eines Fahrzeugsitzes mit einer Kopfstütze, wobei lediglich eine Tragstruktur der Sitzlehne sichtbar ist,
- Fig. 2: einen Schnitt entsprechend Linie II-II in Fig. 4,
- Fig. 3: einen Querschnitt entsprechend Linie III-III in Fig. 6,
- Fig. 4: einen Längsschnitt entsprechend Linie IV-IV in Fig. 2,
- Fig. 4a: einen Querschnitt entsprechend Line IV A- IV A in Fig. 4,
- Fig. 5: einen Längsschnitt entsprechend Linie V-V in Fig. 2,
- Fig. 6: einen Längsschnitt entsprechend Linie VI-VI in Fig. 3,
- Fig. 7: das Detail VII aus Fig. 4,
- Fig. 8: eine Variante des Ausführungsbeispiels von Fig. 1,
- Fig. 9: ein zweites Ausführungsbeispiel in Längsschnittdarstellung, in einer Situation, in der die Kopfstütze fixiert ist, sich also in ihrem Gebrauchszustand befindet,
- Fig. 10: das Ausführungsbeispiel von Fig. 9, bei dem die Kopfstütze nicht fixiert ist und per Hand höhenverstellbar oder durch Schwerkraft absenkbar ist,
- Fig. 11: einen Querschnitt entsprechend der Linie XI-XI in Fig. 9 und 10,
- Fig. 12: einen Querschnitt entsprechend der Linie XII-XII in Fig. 9 und 10,
- Fig. 13: ein drittes Ausführungsbeispiel in perspektivischer Darstellung,
- Fig. 14: einen Längsschnitt entsprechend Linie XVI-XVI in Fig. 16, welcher die Kopfstütze im Gebrauchszustand zeigt,
- Fig. 15: einen vergrößerten Ausschnitt aus Fig. 14,
- Fig. 16: einen Längsschnitt entsprechend Linie XVI-XVI in Fig. 13,
- Fig. 17: einen Querschnitt entsprechend Linie XVII-XVII in Fig. 14,
- Fig. 18: einen Querschnitt entsprechend Linie XVIII-XVIII in Fig. 14,
- Fig. 19: einen Querschnitt entsprechend Linie XIX-XIX in Fig. 14,
- Fig. 20: einen Querschnitt entsprechend Linie XX-XX in Fig. 15,
- Fig. 21: einen Querschnitt entsprechend Linie XXI-XXI in Fig. 15,
- Fig. 22: einen Querschnitt entsprechend Linie XXII-XXII in Fig. 15
- Fig. 23: einen Längsschnitt entsprechend Fig. 16, der eine Kopfstütze im gelösten Zustand zeigt
- Fig. 24: das Detail XXIV von Fig. 16,
- Fig. 25: das Detail XXV von Fig. 23.

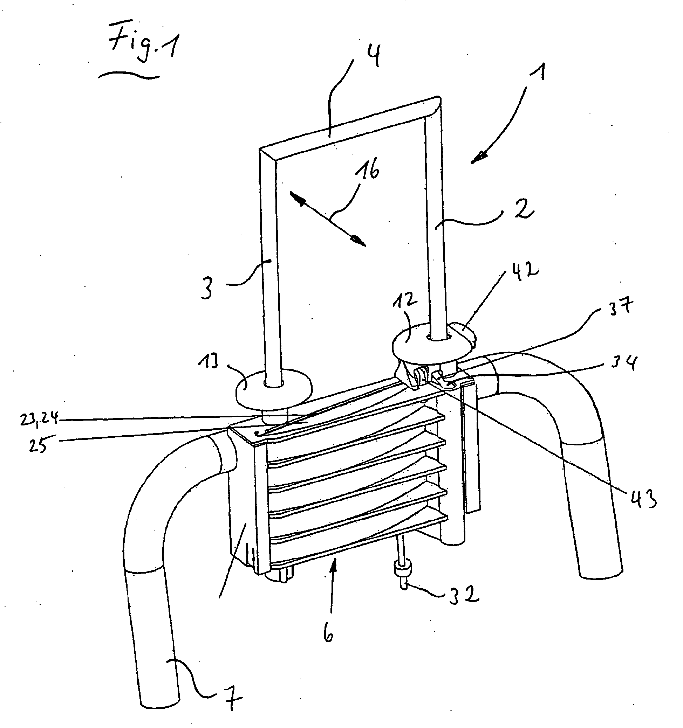

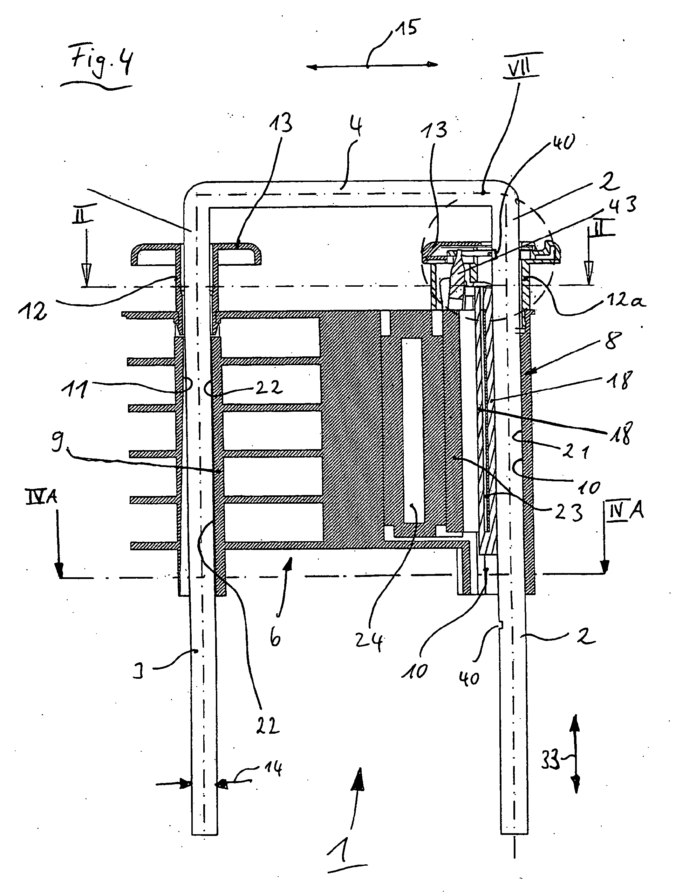

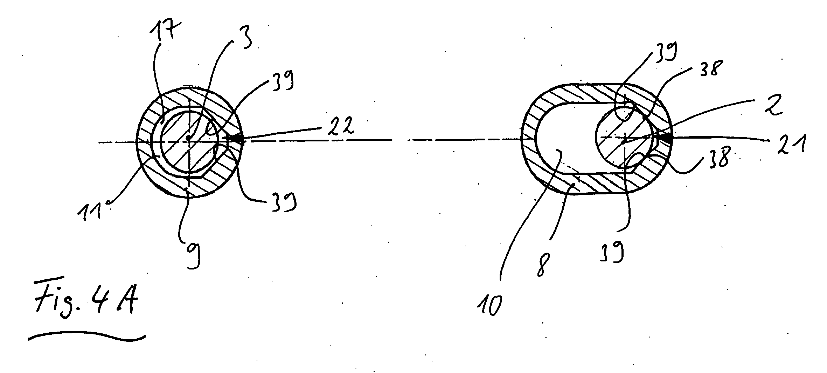

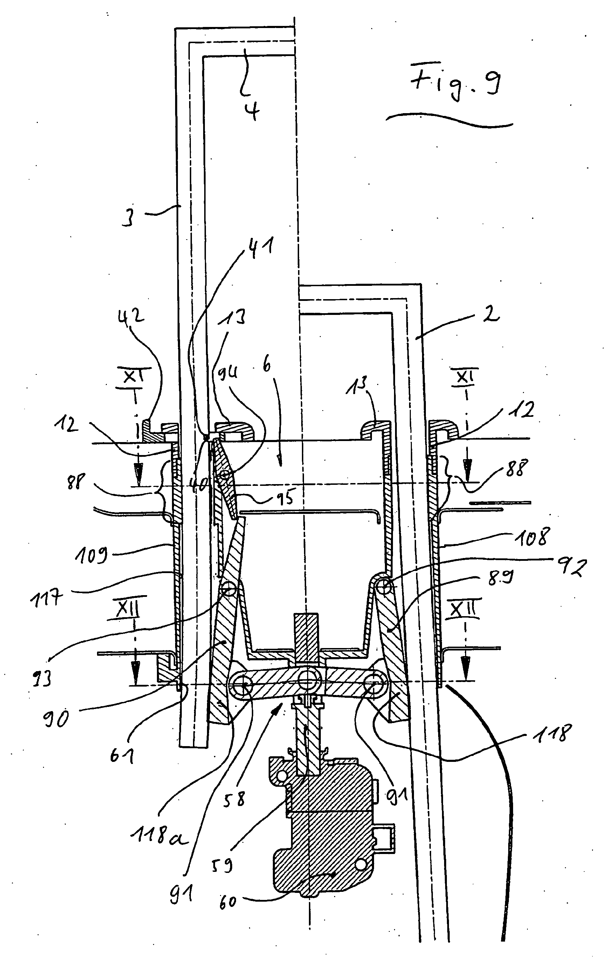

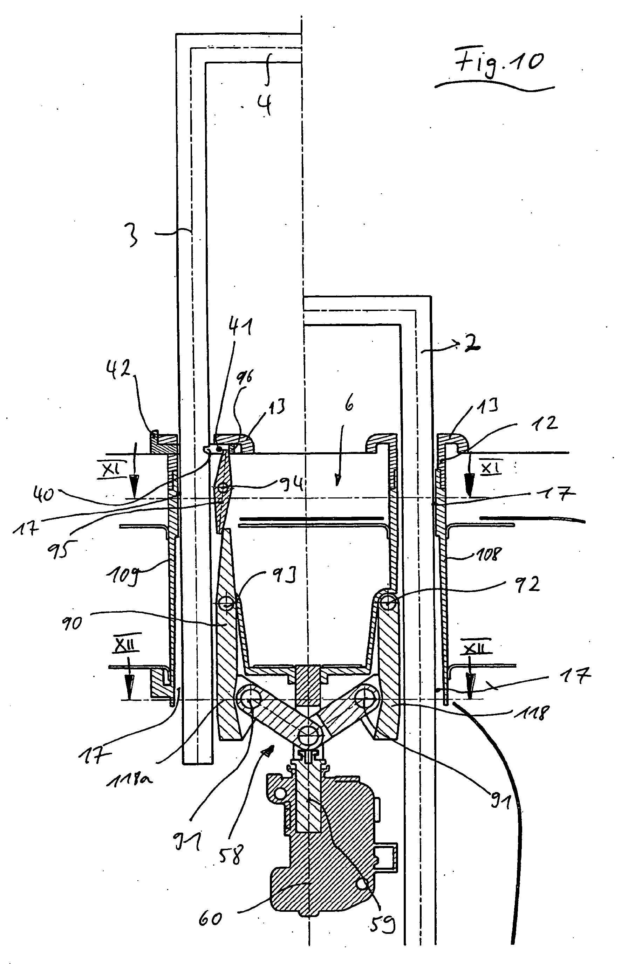

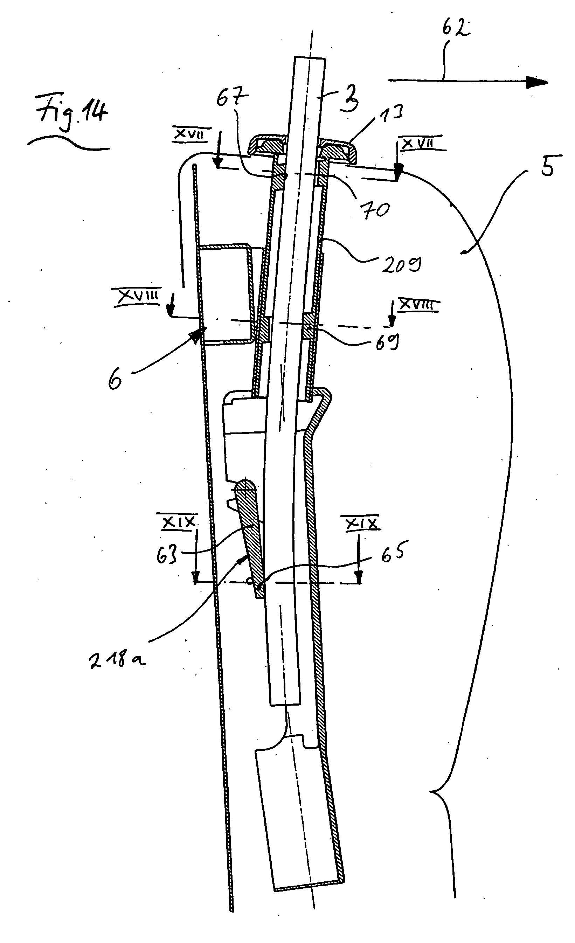

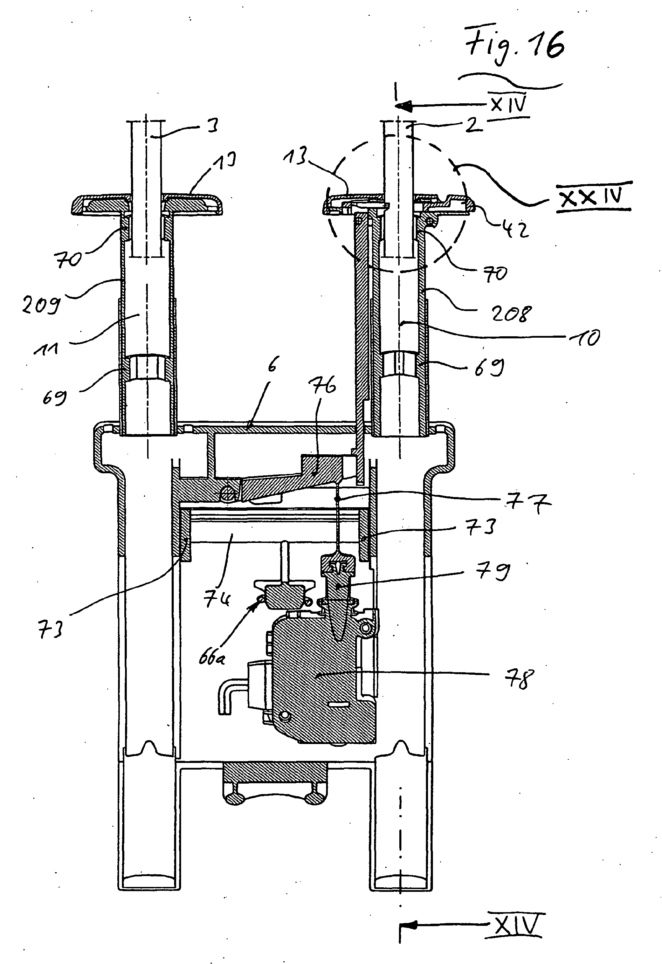

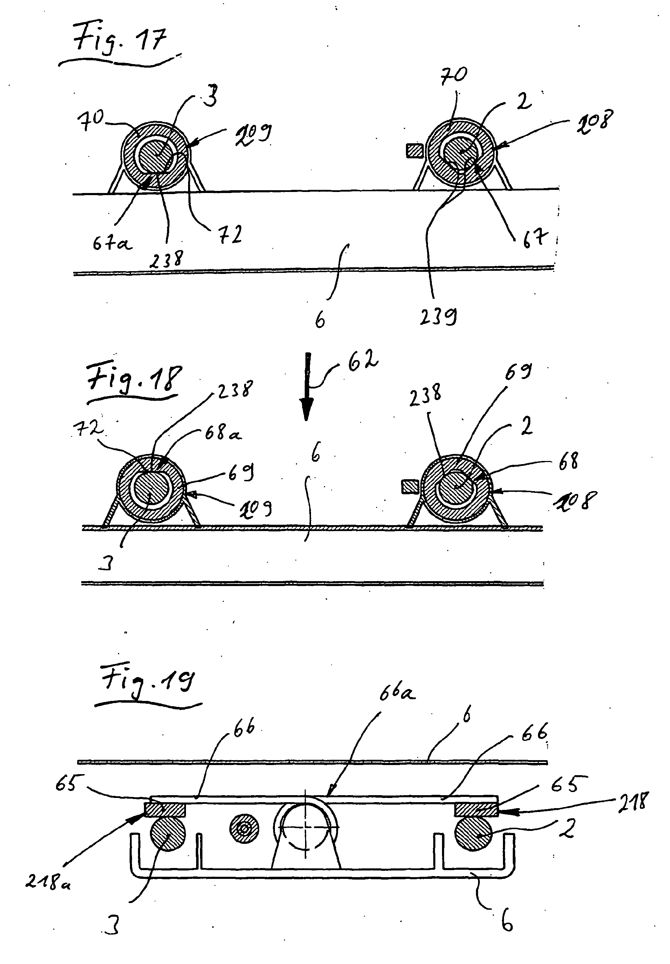

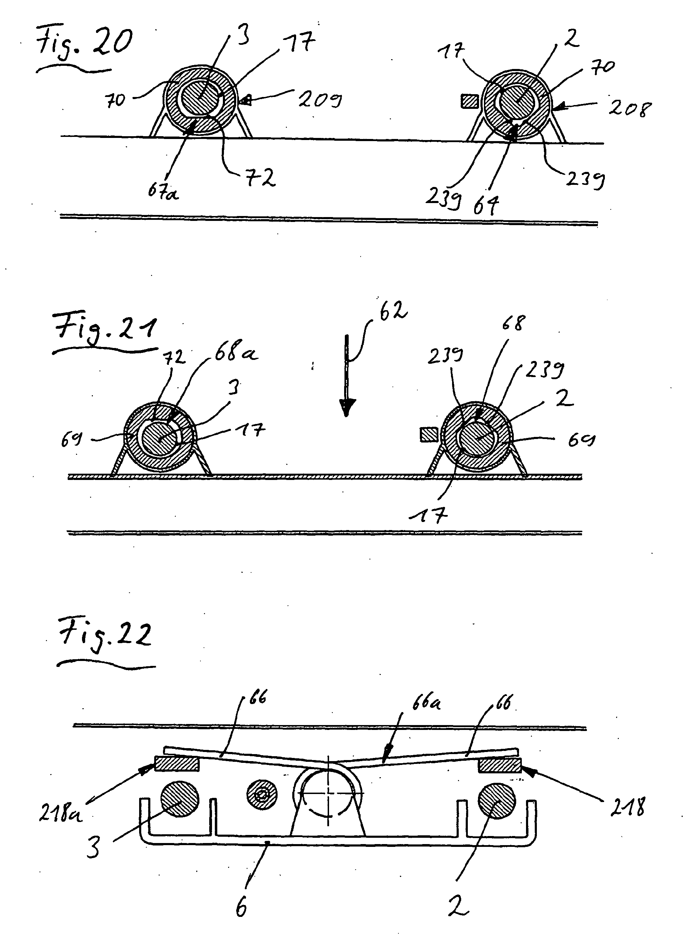

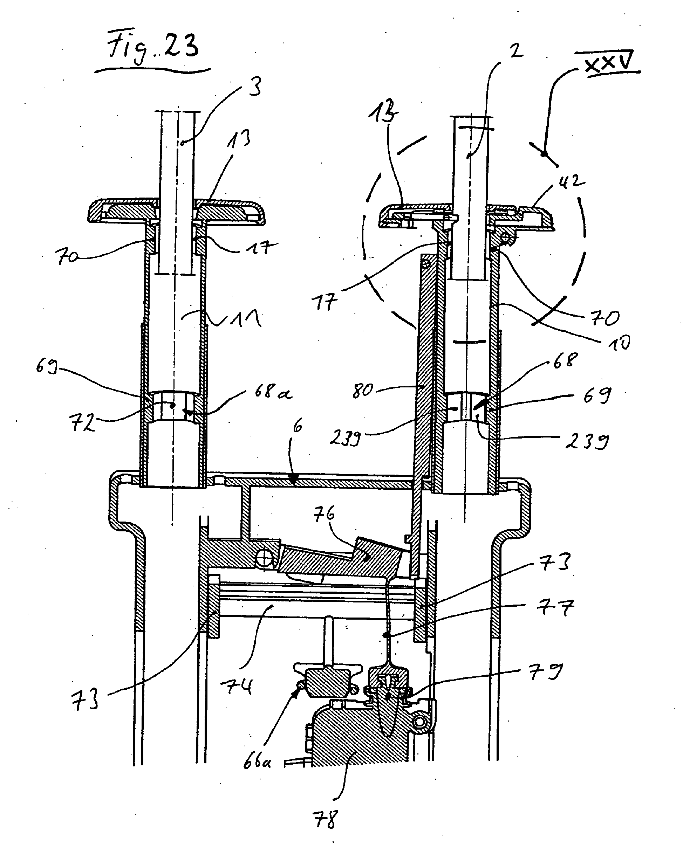

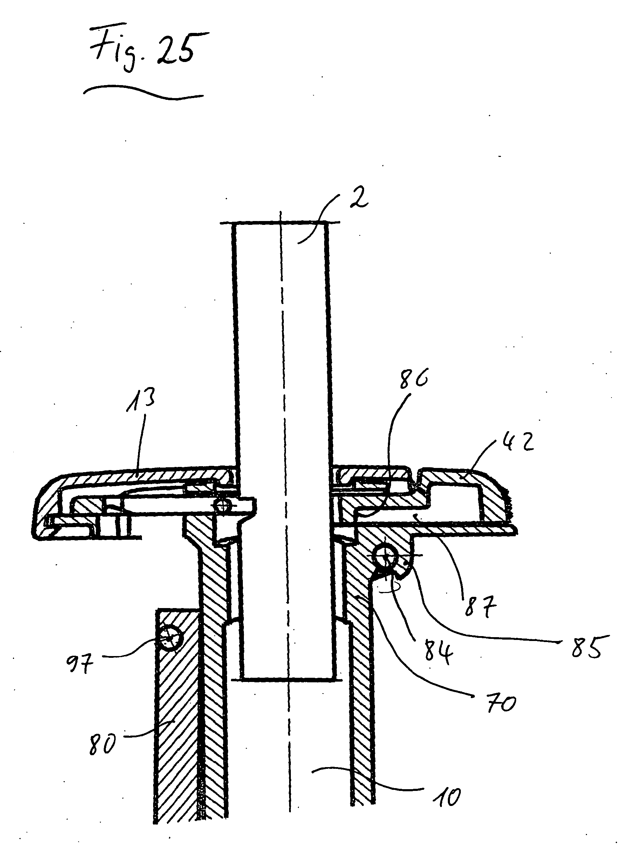

Die Kopfstütze des in Fig. 1 bis Fig. 8 gezeigten Ausführungsbeispiels weist folgenden Grundaufbau auf, welcher auch in den Ausführungsbeispielen gem. Fig. 9 bis 12 bzw. Fig. 13 bis 25 vorhanden ist. Die Kopfstütze, insgesamt mit dem Bezugszeichen 1 versehen, umfasst ein Kopfpolster (nicht dargestellt), welches von einer ersten Haltestange 2 und einer zweiten Haltestange 3 getragen ist. Die beiden im Querschnitt runden Haltestangen werden durch eine Querstrebe 4 auf einen vorgegebenen Abstand gehalten und verlaufen, zumindest was den Sollzustand angeht, parallel zueinander. In der Sitzlehne 5 (dargestellt in Fig. 14) ist eine Tragstruktur 6 für die Sitzlehne 5 vorhanden, wobei diese wiederum an einem Sitzgestell 7 fixiert ist. Die Tragstruktur 6 umfasst zwei Führungsteile 8,9, welche jeweils eine Haltestange 2,3 aufnehmen. Der von einem Führungsteil 8,9 umgrenzte Kanal 10,11 setzt sich oberseits in einem Rohrabschnitt 12 fort, welcher an der Tragstruktur 6 fixiert ist und der an seinem oberen Stirnende eine Abdeckplatte 13 trägt, welche auf der Oberseite der Sitzlehne 5 aufliegt (siehe auch Fig. 14). Der Innendurchmesser eines Kanals 10,11 ist größer als der Durchmesser'14 der Haltestangen 2,3. Zwischen dieser und einem Führungsteil 8,9 ist daher ein vollumfängliches Radialspiel vorhanden, was prinzipiell eine Bewegung der Kopfstütze in Querrichtung 15, das ist eine Richtung, welche sich rechtwinklig zur Fahrzeuglängsrichtung 16 erstreckt. Der Kanal 10 des Führungsteils ist in Querrichtung 15 verbreitert, ist also im Querschnitt Langloch-förmig ausgebildet (siehe auch Fig. 4A).

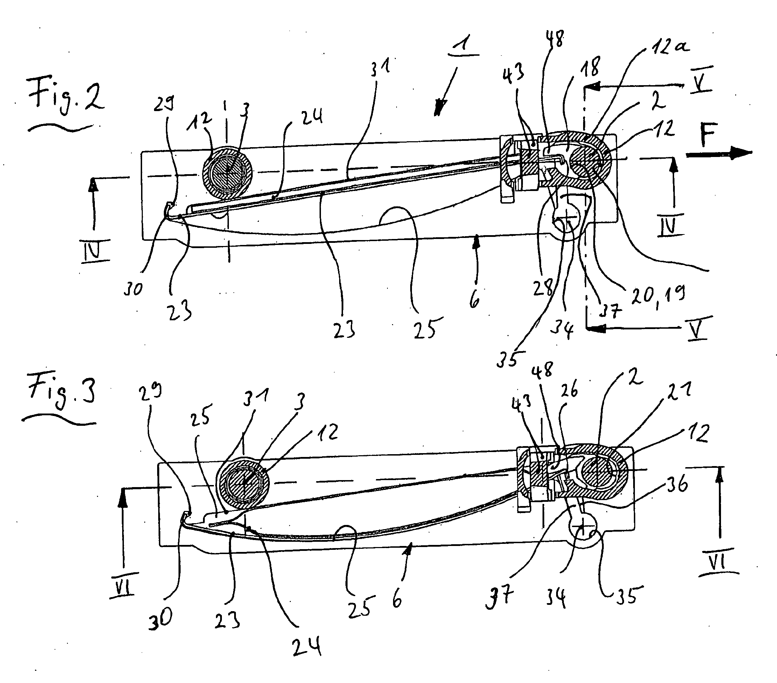

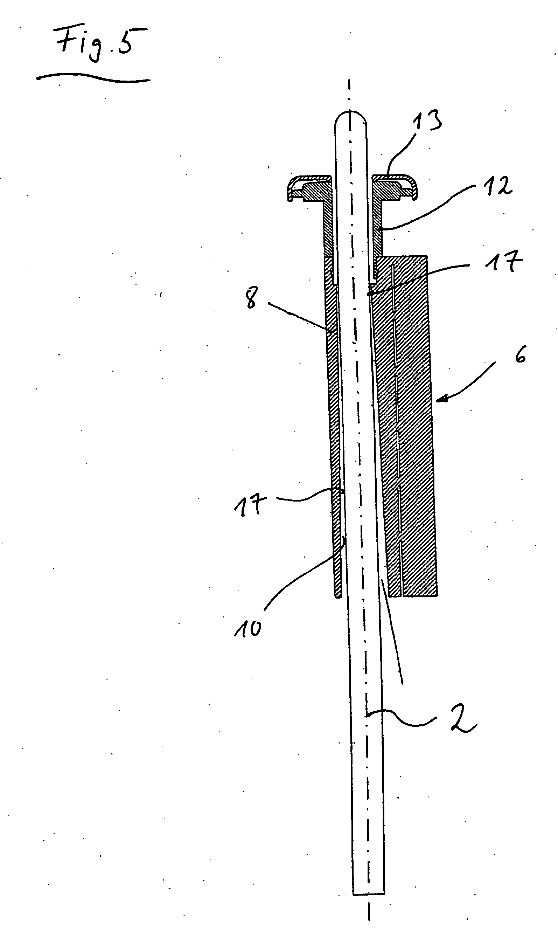

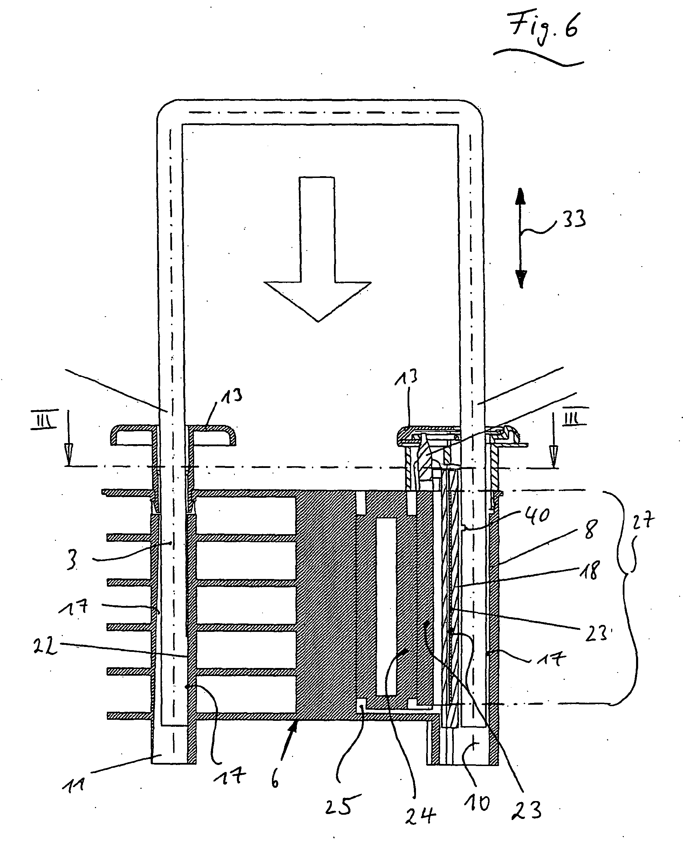

Zur sicheren axialen und radialen Fixierung der Haltestangen 2,3 ist eine Klemmeinrichtung vorhanden, die im folgenden näher beschrieben wird: Sie umfasst ein im wesentlichen leistenförmiges Klemmelement 18, welches im Kanal 10 angeordnet ist und sich im wesentlichen über die gesamte Länge des Führungsteils 8 erstreckt. Die der Haltestange 2 zugewandte Seite des Klemmelements 18 ist komplementär zur Umrissform der Haltestange 2 ausgebildet. Im Gebrauchszustand der Kopfstütze 1 wird das Klemmelement 18 durch einen weiter unten beschriebenen Antrieb in Querrichtung 15 mit einer Seite 19 gegen die Haltestange 2 gedrückt. Die Seite 19 bildet eine Aufnahme 20, in welcher die Haltestange 2 mit einem quer zur Klemmkraft F bzw. rechtwinklig zur Querrichtung 15 wirksamen Formschluss einliegt. Die formschlüssige Fixierung der Haltestange 3 wird noch dadurch verstärkt, dass die dem Klemmelement 18 abgewandte Innenseite des Kanals 10 ebenfalls komplementär zur Umfangsfläche der Haltestange 2 gekrümmt ist, und in der Fixierstellung des Klemmelements 18 gemäß Fig. 2 eine Aufnahme 21 zur formschlüssigen Fixierung der Haltestange 2 bildet. Das Klemmelement 18 ist aus seiner Fixierstellung gemäß Fig. 2,4 in eine Freigabestellung gemäß Fig. 3,6 bewegbar, in der die beiden Aufnahmen 20,21 von der Haltestange 2 radial abgerückt sind und eine Beweglichkeit der Haltestange 2 in Querrichtung 15 und in Axialrichtung ermöglichen. Die Aufnahmen 20,21 bilden dabei ein die Haltestange 2 führendes Lager. Wie dem Querschnitt von Fig. 5 entnehmbar ist, nimmt der Abstand in Fahrzeuglängsrichtung 16 zwischen den Innenseiten des Kanals 10 von oben nach unten kontinuierlich zu, was im übrigen auch bei dem Kanal 11 des Führungsteils 9 der Fall ist. Dadurch ist gewährleistet, dass bei ungünstigen Toleranzen die Haltestangen 2,3 nicht mit den unteren Innenwandbereichen der Führungsteile 8,9 in Berührung kommen.

Wenn sich das Fixierelement 18 in seiner Fixierstellung befindet, wird auch die zweite Haltestange 3 mit einem Umfangsbereich ihrer Umfangsfläche gegen eine im Kanal 11 ausgebildete Aufnahme 22 gedrückt. Diese Aufnahme, die zusammen mit dem restlichen Innenumfangsbereich des Führungsteils 9 ein Lager bildet, wird ebenfalls durch einen komplementär zur Umfangsfläche der Haltestange 3 gekrümmten Wandbereich gebildet. In der Freigabestellung des Klemmelements 18 gemäß Fig. 3 und Fig. 6 ist zwischen den Haltestangen 2,3 und den Führungsteile 8,9 ein allseitiges Radialspiel 17 vorhanden. Die Haltestangen 2,3 sind daher mit nur geringer Reibung in den Kanälen 10,11 geführt, so dass sich die Kopfstütze 1 allein aufgrund ihres Eigengewichtes in die unterste Höhenposition bewegt.

Der Antrieb, mit dem das Klemmelement 18 zwischen seiner Fixier- und Freigabestellung hin und her bewegt werden kann, umfasst als wesentliche Teile eine Blattfeder 23 und ein Luftkissen 24, dessen Befüllungsgrad steuerbar ist. Blattfeder 23 und Luftkissen 24 sind in einem sich nahezu über die gesamte Breite und Höhe der Tragstruktur 6 erstreckenden Raum 25 angeordnet. Dieser mündet mit seinem einen Ende in den Kanal 10 des Führungsteils 8. Die Breite 27 (Fig. 6) der Blattfeder 23 ist etwas kleiner als die Länge des Klemmelements 18 und entspricht etwa der Höhe des Raumes 25. Das dem Führungsteil 8 zugewandte Ende 26 der Blattfeder 23 ist hakenförmig umgebogen und liegt in einer entsprechend geformten Nut 28 des Klemmelements 18 ein. Der Raum 25 erstreckt sich an der Vorder- oder Rückseite des Führungsteils 9 vorbei und verengt sich zu einem im Querschnitt hakenförmig gebogenen Spalt 29, in dem die Blattfeder 23 mit ihrem anderen, ebenfalls hakenförmig gebogenen Ende 30 ortsfest fixiert einliegt. In der Fixierstellung des Klemmelements 18 (Fig. 2, 4) ist die Blattfeder 23 gestreckt und drückt das Klemmelement 18 gegen die Haltestange 2. Sie verläuft dabei etwa parallel zu einer Wand 31 des Raumes 25. Zwischen der Wand 31 und der Blattfeder 23 ist das Luftkissen 24 angeordnet. Über einen Steueranschluss 32 (Fig. 1) ist das Kissen mit Luft befüllbar. Dabei wölbt sich seine der Wand 31 abgewandte Seite vor, wodurch die Blattfeder 23 entsprechend gekrümmt wird. Das Ende 26 wird dabei von der Haltestange 2 weg bewegt und nimmt das Klemmelement 18 mit. Zwischen den Haltestangen 2,3 und den Führungsteilen 8,9 ist nun soviel Radialspiel 17 vorhanden, dass die Kopfstütze 1, wie oben schon erwähnt, allein aufgrund ihres Eigengewichts nach unten bis in ihre unterste Höhenposition gleiten kann.

Das Klemmelement 18 ist um eine sich in Stangenlängsrichtung 33 erstreckende Schwenkachse 34 schwenkbar gelagert. Die Schwenkachse 34 ist in einem Aufnahmekanal 35 angeordnet, welcher über einen Verbindungskanal 36 mit dem Kanal 10 des Führungsteils 8 in Verbindung steht. Die Schwenkachse 34 ist über einen Hebelarm 37 mit dem Klemmelement 18 verbunden. Um eine Schwenkung des Hebelarms im Verbindungskanal 36 zu ermöglichen, erweitert sich dieser zum Kanal 10 hin.

Die Befüllung und Entleerung des Luftkissens 24 ist beispielsweise vom Fahrersitz aus steuerbar. Der Fahrer kann somit die Kopfstütze eines Rücksitzes absenken, um freie Sicht nach hinten zu erhalten. Unabhängig von der ferngesteuerten, schwerkraftbetätigten Absenkung der Kopfstütze 1 ist auch eine Höhenverstellung, also ein Absenken oder Anheben der Kopfstütze per Hand vorgesehen. Dazu muss die Klemmkraft F so ausgelegt sein, dass einerseits ein wackel- und klapperfreier Sitz der Kopfstütze 1 gewährleistet und andererseits eine Höhenverstellung der Kopfstütze 1 mit möglichst geringem Körperkraftaufwand gewährleistet ist. Dies wird zum einen dadurch erreicht, dass ganz allgemein für ein Klemmelement ein Kunststoffmaterial gewählt wird, das eine geringe Reibung gegenüber der metallischen Haltestange aufweist. Besonders geeignet sind hier sogenannten legierte Kunststoffe, also solche Kunststoffe, denen reibungsverringernde Zusätze, wie Teflonparikel, Talkum oder dergleichen beigemengt sind. Zum anderen kann die Reibung dadurch verringert werden, dass die Aufnahmen 20,21,22 so ausgestaltet sind, dass Sie mit in Umfangsrichtung beabstandeten punkt- oder linienförmigen Berührungsstellen 38 (siehe Fig. 4A) mit der Umfangsfläche der Haltestangen 2,3 zusammenwirken. Dies kann etwa dadurch erreicht werden, dass die Aufnahmen 20,21,22 tangential zur Umfangsfläche der Haltestangen 2,3 ausgerichtete und in Stangenlängsrichtung 33 verlaufende Planflächen 39 aufweisen. In Fig. 4A ist auf der rechten Seite der Gebrauchszustand der Kopfstütze 1 dargestellt. Die Haltestange 2 wird vom Klemmelement 18 (in Fig. 4A nicht dargestellt) mit ihrer Umfangsfläche gegen die Planflächen 39 gedrückt. Es bilden sich somit linienförmige, sich in Stangenlängsrichtung 33 erstreckende Berührungsstellen 38. Auf der linken Seite von Fig. 4A ist die Situation angedeutet, in der sich das Klemmelement 18 in seiner Freigabestellung befindet. Hier ist ein allseitiges, ein nahezu reibungsloses Absenken der Kopfstütze bewirkendes Radialspiel 17 vorhanden.

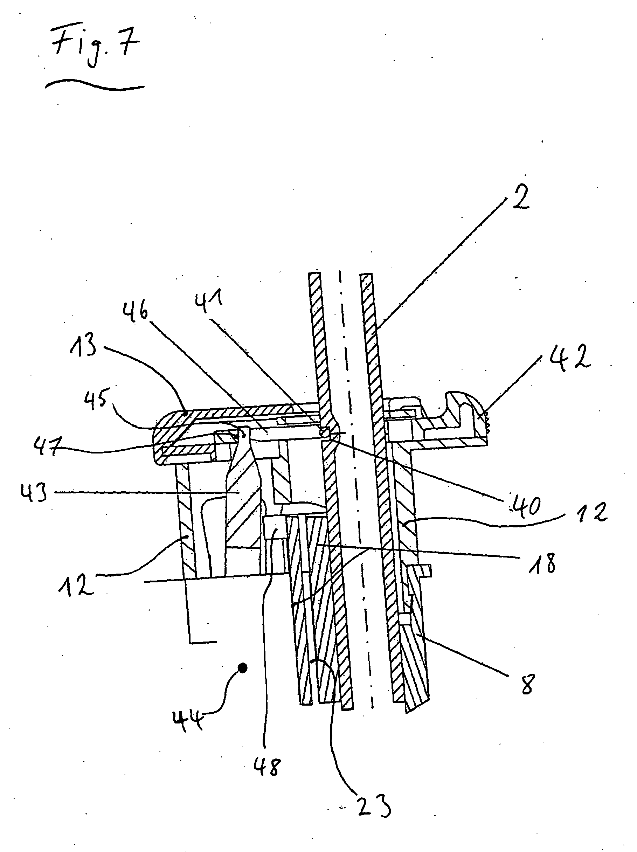

An der Innenseite der Haltestange 2 sind mehrere Kerben 40 eingebracht, in die ein im Bereich der Abdeckplatte 12 angeordneter Riegeldraht 41 einrastet. Der Riegeldraht 41 wird mit einem an der Abdeckplatte 12 in Querrichtung 15 geführten Schieber 42 aus einer Kerbe 40 herausbewegt. Die Kopfstütze 1 kann dann in eine andere Höhenposition gebracht werden, wobei nach Loslassen des Schiebers 42 der Riegeldraht 41 in die nächste Kerbe einrastet. Damit eine ferngesteuerte Absenkung der Kopfstütze möglich ist, ist eine Bewegungskoppelung zwischen dem Klemmelement 18 und dem Riegeldraht 41 vorgesehen, derart, dass die Arretierung der Haltestange in der Freigabestellung des Klemmelements aufgehoben ist und dass in der Fixierstellung des Klemmelements 18 eine Lösung der Arretierung und eine Höhenverstellung der Kopfstütze 1 per Hand möglich ist. Die Bewegungskoppelung wird durch einen Hebelarm 43 gewährleistet, welcher um eine innerhalb der Tragstruktur 6 angeordneten Achse 44 schwenkbar gelagert ist. Mit seinem Freiende 45 greift der Hebelarm 43 in eine Ausnehmung 46 im Schieber 42 ein. In der Raststellung des Riegeldrahtes 41 (Fig. 7) liegt das Freiende 45 an der vom Riegeldraht 41 entfernten Wand 47 der Ausnehmung 46 an. Die andere Wand (in Fig. 7 nicht sichtbar) liegt am Riegeldraht 41 an. Eine Betätigung des Schiebers 42 bewegt daher den Riegeldraht 41 aus der Kerbe 40 heraus. Der Hebelarm 43 bleibt von der Bewegung des Schiebers 42 aufgrund der Ausnehmung 46 unbeeinflusst. Wird das Klemmelement 18 aus seiner Fixierstellung in seine Freigabestellung bewegt, wird der Hebelarm 43 über einen vom Klemmelement 18 abstehenden Vorsprung 48 in Fig. 7 nach links geschwenkt, wobei er mit seinem Freiende 45 den Schieber 42 mitnimmt. Die Haltestange 2 wird dadurch entriegelt und kann in ihre unterste Höhenposition fallen.

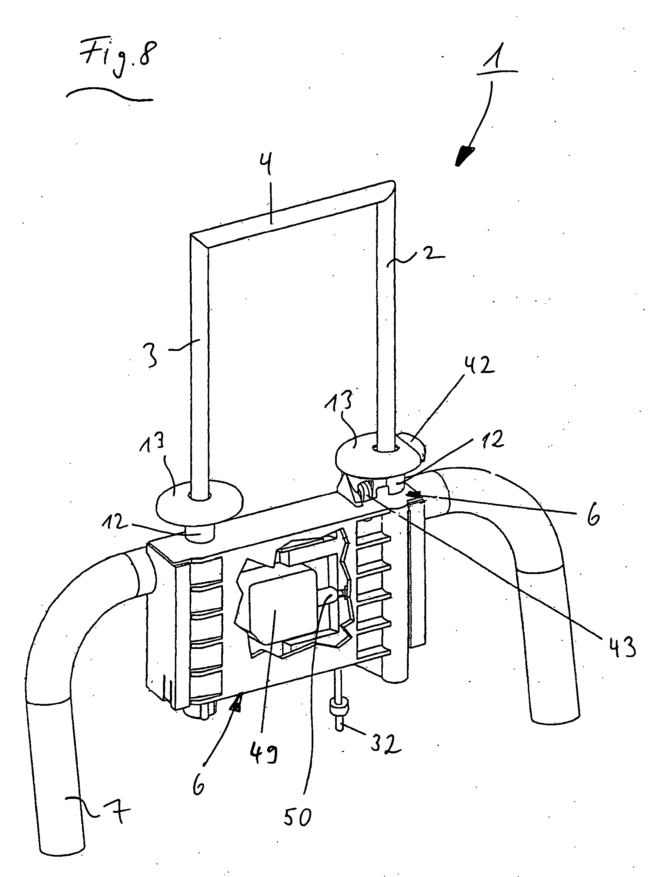

Bei der Variante von Fig. 8 ist als Antrieb für das Klemmelement 18 ein in Fixierrichtung federbeaufschlagter Membranzylinder bzw. eine Pneumatikdose 49 vorgesehen. Diese ist innerhalb der Tragstruktur 6 angeordnet und betätigt über einen federbelasteten Stößel 50 das Klemmelement 18 (in Fig. 8 nicht sichtbar). Die Bewegung des Klemmelements 18 in die Freigabestellung erfolgt über eine Beaufschlagung der Pneumatikdose 49 mit Druckluft über den Steueranschluss 32. Sowohl bei der Variante von Fig. 8 als auch jener von Fig. 1 wird die Klemmkraft F von einer Feder erzeugt. Dies hat den Vorteil, dass bei einer Abweichung der Haltestangen 2,3 von ihrer Sollausrichtung, z.B. bei einem Parallelitätsfehler, während der handbetätigten Höhenverstellung die Haltestange 2 stets mit nahezu der gleichen Klemmkraft F beaufschlagt wird. Wenn sich während der Höhenverstellung die Stange vom Klemmelement 18 wegbewegt, wird dieses automatisch durch die Feder nachgestellt. Wenn sich die Stange dem Klemmelement 18 nähert, wird dieses gegen die Federwirkung zurückgedrängt. Es kommt also auch im Falle der genannten Toleranzabweichungen zu keiner nennenswerten Erhöhung der Reibungskraft zwischen Haltestange 3 und Führungsteil 8 bzw. Klemmelement 18, so dass eine leichtgängige Höhenverstellung per Hand mit nahezu gleichbleibenden Kraftaufwand möglich ist. Dies gilt mutatis mutandis auch für die weiter unten beschriebenen Ausführungsbeispiele.

Bei dem in Fig. 9 bis 12 dargestellten Ausführungsbeispiel werden beide Haltestangen 2,3 von ihren einander zugewandten Innenseiten her, also in gegensinniger Richtung, von jeweils einem Klemmelement 118,118a beaufschlagt. Der obere Endabschnitt 88 der Führungsteile 108,109 bildet ein die Haltestange 2,3 führendes Lager.

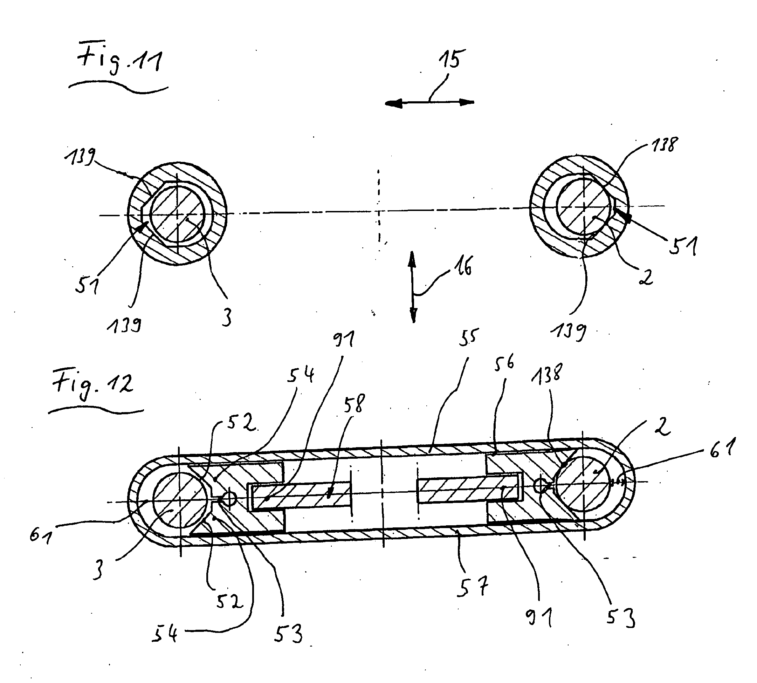

Die Beaufschlagung der Haltestangen 2,3 erfolgt an einer unteren Position der Führungsteile 108,109 oder an einer unterhalb der Führungsteile liegenden Position. Die Beaufschlagung ist weiterhin derart, dass die Haltestangen 2,3 unter Vergrößerung ihres Abstandes elastisch verformt bzw. aufgeweitet werden. Dabei werden die Haltestangen 2,3 mit einem in Querrichtung 15 weisenden Umfangsabschnitt in eine in den Endabschnitten 88 angordnete Aufnahme 51 gedrückt, welche zur Verringerung der Reibungskräfte von zwei Planflächen 139 aufweist. Der Gebrauchszustand der Kopfstütze bzw. der Zustand, wenn sich die Klemmelemente 118,118a in ihrer Fixierstellung befinden, ist in Fig. 11 und 12 rechts, also für den Fall der Haltestange 2, verdeutlicht. Diese liegt mit ihrer Umfangsfläche unter Ausbildung linienförmiger Berührungsstellen 138 an den Planflächen 139 an. Die Fixierung in Querrichtung 15 erfolgt somit auf die Haltestangen 2,3 einwirkende Klemmkraft F und in Fahrzeuglängsrichtung 16 durch den Formschluss zwischen den Aufnahmen 51 und den Haltestangen 2,3. Ein derartiger Formschluss ist auch zwischen den Klemmelementen 118,118a und den Haltestangen 2,3 vorhanden, wie aus Fig. 12 ersichtlich ist. Auch hier stellt der rechte Teil der Abbildung den fixierten und der linke Teil den gelösten Zustand der Kopfstütze 1 dar. Die mit den Haltestangen 2,3 zusammenwirkende Seite der Klemmelemente 118,118a ist konkav gekrümmt und weist zwei tangential zu der Umfangsfläche der Haltestangen 2,3 und in Stangenlängsrichtung 33 verlaufene Planflächen 52 auf. Durch einen Axialschlitz 53 ist zumindest der mit einer Haltestange 2,3 zusammenwirkende Teil eines Klemmelements 118,118a in Federzungen 54 unterteilt, wobei jede Federzunge 54 eine Planfläche 52 trägt. Die Klemmelemente 118,118a sind in einem Gehäuse 55 der Tragstruktur 6 mit geringem Spiel 56 zur Gehäusewand 57 geführt. Durch das Spiel 56 ist gewährleistet, dass sich die Klemmelemente 118,118a innerhalb des Gehäuses 55 leichtgängig bewegen lassen. In ihrer Schließstellung werden die Klemmelemente 118,118a gegen die Haltestangen 2,3 gedrückt, wodurch diese geringfügig elastisch auseinander gebogen werden. Durch die Beaufschlagung der einen Winkel beispielsweise von 90° anschließenden Planflächen 52 werden die Federzungen 54 in Fahrzeuglängsrichtung 16 aufgespreizt und mit ihren Außenflanken gegen die Gehäusewand 57 gedrückt. Dadurch ist ein spielfreier, in Fahrzeuglängsrichtung 16 wirkender Formschluss zwischen den Haltestangen 2,3 und den Klemmelementen 118,118a gewährleistet. Die Klemmelemente 118,118a sind über ein Kniehebelgetriebe 58 mit dem Stößel 59, beispielsweise eines Elektromotors 60 verbunden. Um eine gleichbleibende Klemmkraft auf die Haltestangen 2,3 zu gewährleisten, kann in den Kraftübertragungsweg zwischen Kniehebelgetriebe 58 und Stößel 59 ein Federelement, etwa in Form einer Drehfeder (nicht dargestellt) angeordnet sein.

Wie insbesondere Fig. 12 zu entnehmen ist, werden die Haltestangen 2,3 durch die Klemmelemente 118,118a nicht gegen einen mechanischen Widerstand, etwa die Wand eines Führungsteils 108,109 gedrückt, sondern es bleibt stets ein Abstand 61 frei, der in Fig. 12 zur Verdeutlichung etwas übertrieben dargestellt ist. Die Haltestangen 2,3 liegen außer an den Klemmelementen 118,118a nur noch an den Aufnahmen 51 der Führungsteile 108,109 an. Ansonsten ist die lichte Innenweite der Führungsteile 108,109 so bemessen, dass eine Anlage der Haltestangen 2,3 am Führungsteil 108,109 verhindert ist. Die Führung der Haltestangen 2,3 erfolgt also ausschließlich im Bereich der Endabschnitte 88 und im Bereich der Klemmelemente 118, und zwar bei einer Höhenverstellung ohne Radialspiel 17 und bei einer Schwerkraftabsenkung mit Radialspiel 17. Die Klemmelemente 118,118a sind als Hebelarme 89,90 ausgebildet, die sich in Stangenlängsrichtung 33 erstrecken. An ihrem unteren Ende sind die Hebelarme 89,90 über ein Gelenk 91 mit dem Kniehebelgetriebe 58 verbunden. Der Hebelarm 89 ist an seinem oberen Ende über ein Gelenk 92 mit der Tragstruktur 6 verbunden. Der Hebelarm 90 ist länger als der Hebelarm 89, ist jedoch an der gleichen Höhenposition wie der Hebelarm 89 über ein Gelenk 93 schwenkbar mit der Tragstruktur 6 verbunden. Die Achsen der genannten Gelenke 91,92,93 verlaufen in Fahrzeuglängsrichtung. Der Hebelarm 90 wirkt mit seinem oberen Ende mit einem mittig an einer sich in Fahrzeuglängsrichtung 16 erstreckenden Achse 94 gelagerten Hebelarm 95 zusammen. In der Freigabestellung der Klemmelemente 118,118a beaufschlagt der Hebelarm 90 mit seinem oberen Ende das untere Ende des Hebelarms 95. Dieser dreht sich dabei so, dass sich sein oberes Ende, welches mit einem Anschlag 96 des Schiebers 42 zusammenwirkt und diesen in eine Stellung bringt, in der ein Riegeldraht 41 außer Eingriff mit einer Kerbe 40 in der Haltestange 3 gebracht wird. Die Kopfstütze 1 ist dann mit ihren Haltestangen 2,3 in den Führungsteilen 108,109 frei beweglich. In der Fixierstellung der Klemmelemente 118,118a wird der Hebelarm 95 durch den Schieber 42 in seine Ausgangsposition zurückbewegt, in der er mit seinem unteren Ende am oberen Ende des Hebelarms 90 anliegt. Die mit den Haltestangen zusammenwirkenden Seiten der Klemmelemente 218, 218a sind als sich in Querrichtung 15 erstreckende Planflächen ausgebildet.

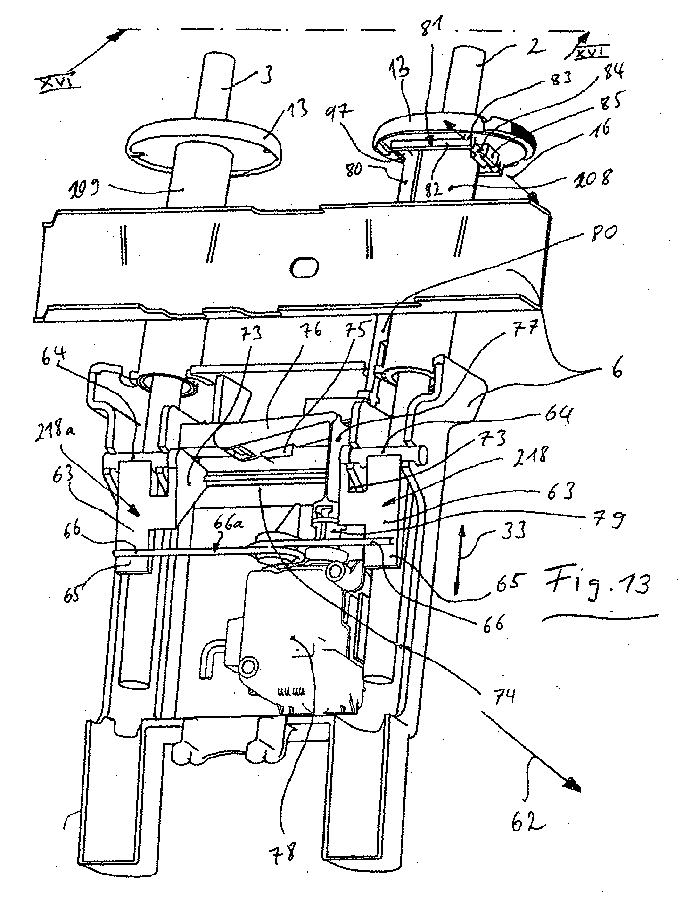

In Fig. 13 bis 25 ist ein Ausführungsbeispiel dargestellt, bei welchem im Gegensatz zu den oben beschriebenen Ausführungsbeispielen die Haltestangen 2,3 nicht in Querrichtung 15, sondern in Fahrzeuglängsrichtung 16, genauer in Fahrtrichtung 62. Dementsprechend wird ein in Querrichtung 15 wirksamer Formschluss zwischen den Führungsteilen 208,209 und den Haltestangen 2,3 hergestellt. Die Klemmelemente 218,218a werden durch zwei sich etwa in Stangenlängsrichtung 33 erstreckende Hebelarme 63 gebildet, die jeweils um eine an der Tragstruktur 6 fixierten Achse 64 schwenkbar gelagert sind. Das nach unten weisende Freiende 65 der Hebelarme 63 wird jeweils von dem Schenkel 66 einer Schenkelfeder 66a gegen die Umfangsfläche der Haltestangen 2,3 gedrückt. Diese können sich dabei zwar geringfügig elastisch verformen, was aber für eine sichere Fixierung der Kopfstütze 1 nicht erforderlich ist. In den Führungsteilen 208,209 ist jeweils ein oberes, von einem radial nach innen abstehenden Ringvorsprung 70 gebildetes und ein unteres, von einem Ringvorsprung 69 gebildetes Lager für die Haltestangen 2,3 vorhanden. An den Ringvorsprüngen 69,70 sind Aufnahmen 67 bzw.68 vorhanden. Die Aufnahme 67 des oberen Ringvorsprung 70 befindet sich auf der in Fahrtrichtung 62 weisenden Seite einer Haltestange 2,3, wogegen sich die Aufnahme 68 des unteren Ringvorsprungs 69 auf der gegen die Fahrtrichtung 62 weisenden Seite der Haltestangen 2,3 befinden. Die mit der Haltestange 2 zusammenwirkenden Aufnahmen 67,68 sind durch tangential zur Umfangsfläche der Haltestange 2 und in deren Längsrichtung 33 verlaufende und einen Winkel einschließende Planflächen 239 gebildet. In der Fixierstellung des Klemmelements 218 wirkt die Haltestange 2 an linienförmigen Berührungsstellen 238 mit den Planflächen 239 zusammen. Dadurch wird ein in Querrichtung 15 wirksamer Formschluss zwischen Haltestange 2 und Führungsteil 208 hergestellt.

Die mit der Haltestange 3 zusammenwirkenden Aufnahmen 67a,68a des Führungsteils 109 weisen eine sich in Querrichtung 15 erstreckende Planfläche 72 auf, an welcher die Haltestange 3 mit einer linienförmigen Berührungsstelle 238 anliegt. Dadurch ist gewährleistet, dass bei einer Höhenverstellung per Hand im Falle eines Parallelitätsfehlers der Haltestangen 2,3 die Haltestange 3 eine Bewegung in Querrichtung 15 ausführen kann, während die Haltestange 2 in den Aufnahmen 67 und 68 in Querrichtung 15 spielfrei geführt ist.

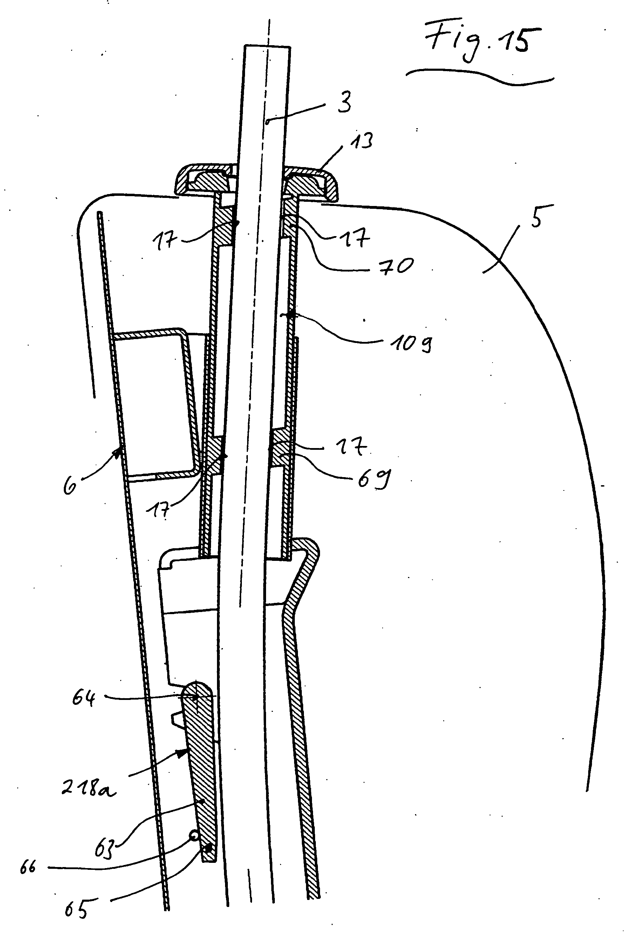

An den einander zugewandten Innenseiten der Hebelarme 63 ist jeweils ein sich in Fahrtrichtung 62 weg erstreckender Ausleger 73 angeformt. Dessen Schwenkbetätigung nach unten bewirkt, dass die Klemmelemente 218,218a in ihre Freigabestellung bewegt werden. Zur Schwenkbetätigung sind die Freienden der Ausleger 73 über ein etwa leistenförmiges Brückenteil 74 miteinander verbunden, welches an seinem oberen Rand einen gegen die Fahrtrichtung 62 abstehenden Anschlag 75 aufweist. Am Traggestell 6 ist ein sich in Querrichtung 15 erstreckender Hebel 76 angelenkt. Das Freiende des Hebels 76 ist über ein Verbindungsstück 77 mit einem etwa in Stangenlängsrichtung 33 von einem Elektromotor 78 bewegbaren Stößel 79 verbunden. Wird der Stößel 79 vom Elektromotor 78 nach unten bewegt, nimmt der Hebel 76 das Brückenteil 74 mit, wodurch die Ausleger 73 nach unten geschwenkt und dementsprechend die daran angeformten Hebelarme 63 in ihre Freigabestellung gelangen (Fig. 15 und Fig. 20 bis 23). In der Freigabestellung sind die Haltestangen 2,3 in den durch die Ringvorsprünge 69, 70 gebildeten Lagern mit allseitigem Radialspiel 17 geführt. Das Radialspiel ist dabei so bemessen, dass auch, eine gekrümmte Haltestange 2,3, wie im vorliegenden Beispiel, so geführt ist, dass eine Absenkung der Kopfstütze 1 nur aufgrund ihres Eigengewichts möglich ist.

Eine Arretierung der Kopfstütze 1 in unterschiedlichen Höhenpositionen ist auf die gleiche Art und Weise realisiert wie bei den weiter oben beschriebenen Ausführungsbeispielen, nämlich über einen in eine Kerbe 40 eingreifenden Riegeldraht 41, wobei diese Arretierung durch einen Schieber 42 gelöst werden kann. Die Bewegungskoppelung zwischen den Klemmelementen 218,218a und dem Schieber 42 erfolgt über einen mit dem Freiende des Hebels 76 antriebsmäßig verbundenen, sich etwa in Stangenlängsrichtung 33 nach oben unter die Abdeckplatte 13 erstreckenden Stößel 80 (Fig. 13,24,25). Mit dessen oberen Ende sind beidseitig zwei das Führungsteil 208 flankierende Winkelhebel 81 über ein Gelenk 97 verbunden, die jeweils einen sich etwa in Querrichtung 15 erstreckenden Schenkel 82 und einen an dessen Freiende angeformten, sich etwa in Stangenlängsrichtung 33 erstreckenden Schenkel 83 aufweisen. An der Verbindungsstelle zwischen den Schenkeln 82,83 sind die Winkelhebel 81 über eine sich in Fahrzeuglängsrichtung 16 erstreckende Achse 84 miteinander verbunden. Die Achse 84 ist in einem am Führungsteil 208 angeformten Lager 85 schwenkbar geführt. Mit seinem Freiende (nicht dargestellt) greift der Schenkel 83 in eine sich in Querrichtung 15 erstreckende unterseitige Ausnehmung 87 des Schiebers 42 ein und wirkt dort mit einer die Ausnehmung 87 auf ihrer der Haltestange 2 zugewandten Seite begrenzenden Anschlagfläche 86 zusammen.

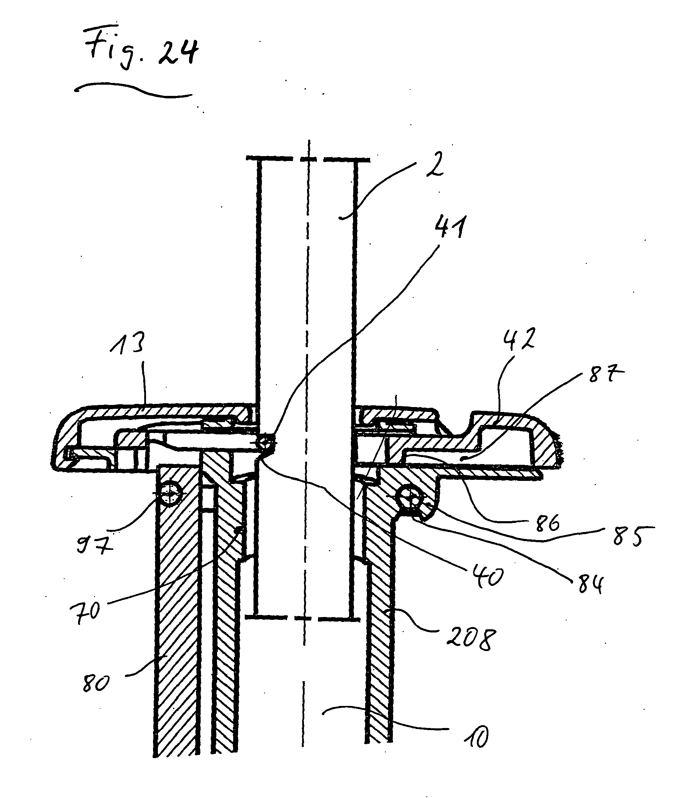

Bei einer Verstellung der Kopfstütze 1 per Hand wird zur Lösung der Arretierung der Schieber 42 betätigt, in Fig. 24 nach links verschoben. Dabei wird der Riegeldraht 41 außer Eingriff mit der Kerbe 40 gebracht. Wegen der Ausnehmung 87 behindert der unterseits in den Schieber hineinragende Schenkel 83 dessen Verschiebebewegung nicht. Werden jedoch, ausgehend von der in Fig. 24 gezeigten Situation, die Klemmelemente 218,218a in ihre Freigabestellung bewegt, indem der Hebel 76 vom Elektromotor 78 nach unten geschwenkt wird, wird der Stößel 80 aufgrund seiner antriebsmäßigen Verbindung mit dem Hebel 76 nach unten mitgenommen und dementsprechend der Winkelhebel 81 auf seiner mit dem Stößel 80 verbundene Seite nach unten geschwenkt. Die Folge ist, dass der Schenkel 83 des Winkelhebels 81 gegen die Anschlagfläche 86 des Schiebers 42 gedrückt wird, so dass dieser betätigt und der Riegeldraht 41 außer Eingriff mit der Kerbe 40 gelangt. Die Kopfstütze 1 kann nun schwerkraftbetätigt in ihre unterste Höhenposition fallen.

### Bezugszeichenliste

- 1: Kopfstütze
- 2: Haltestange
- 3: Haltestangen
- 4: Querstrebe
- 5: Sitzlehne
- 6: Tragstruktur
- 7: Sitzgestell
- 8: Führungsteil
- 9: Führungsteil
- 10: Kanal
- 11: Kanal
- 12: Rohrabschnitt
- 13: Abdeckplatte
- 14: Durchmesser (von 2,3)
- 15: Querrichtung
- 16: Fahrzeuglängsrichtung
- 17: Radialspiel
- 18: Klemmelement
- 19: Seite (von 18)
- 20: Aufnahme (von 18)
- 21: Aufnahme (von 8)
- 22: Aufnahme (von 9)
- 23: Blattfeder
- 24: Luftkissen
- 25: Raum
- 26: Ende (von 23)
- 27: Breite (von 23)
- 28: Nut (von 18)
- 29: Spalt
- 30: Ende (von 23)
- 31: Wand
- 32: Steueranschluss
- 33: Längsrichtung (von 2,3)
- 34: Schwenkachse
- 35: Aufnahmekanal
- 36: Verbindungskanal
- 37: Hebelarm
- 38: Berührungsstelle
- 39: Planfläche
- 40: Kerbe
- 41: Riegeldraht
- 42: Schieber
- 43: Hebelarm
- 44: Achse (von 43)
- 45: Freiende
- 46: Ausnehmung
- 47: Wand (von 46)
- 48: Vorsprung
- 49: Pneumatikdose
- 50: Stößel
- 51: Aufnahme (von 108,109)
- 52: Planfläche
- 53: Axialschlitz
- 54: Federzunge
- 55: Gehäuse
- 56: Spiel
- 57: Gehäusewand
- 58: Kniehebelgetriebe
- 59: Stößel
- 60: Elektromotor
- 61: Abstand
- 62: Fahrtrichtung
- 63: Hebelarm
- 64: Achse
- 65: Freiende
- 66: Schenkel
- 66a: Schenkelfeder
- 67: Aufnahme
- 68: Aufnahme
- 69: Ringvorsprung
- 70: Ringvorsprung
- 71: Berührungsstelle
- 72: Planfläche
- 73: Ausleger
- 74: Brückenteil
- 75: Anschlag
- 76: Hebel
- 77: Verbindungsstück
- 78: Elektromotor
- 79: Stößel
- 80: Stößel
- 81: Winkelhebel
- 82: Schenkel
- 83: Schenkel
- 84: Achse
- 85: Lager
- 86: Anschlagfläche
- 87: Ausnehmung
- 88: Endabschnitt
- 89: Hebelarm
- 90: Hebelarm
- 91: Gelenk
- 92: Gelenk
- 93: Gelenk
- 94: Achse
- 95: Hebelarm
- 96: Anschlag
- 97: Gelenk

## Patentansprüche

1. Fahrzeugsitz mit einer Kopfstütze (1), welche mit wenigstens einer ersten Haltestange (2,3) in einem an einer Sitzlehne (5) fixierten Tragstruktur (6) vorhandenen Lager höhenverstellbar geführt ist, **dadurch gekennzeichnet, dass**
- das Lager die Haltestange (2,3) mit Radialspiel (17) umfasst und ein von einem ferngesteuerten Antrieb zwischen einer Fixierstellung und einer Freigabestellung bewegbares Klemmelement vorhanden ist,
- das Klemmelement (18,118,218) in der Fixierstellung die Haltestange (2,3) quer zu ihrer Längsrichtung (33) mit einer Klemmkraft (F) beaufschlagt, wodurch die Haltestange (2,3) mit einem Umfangsbereich ihrer Umfangsfläche gegen das Lager gedrückt wird,
- das Lager so ausgestaltet ist, dass die mit einer Klemmkraft (F) beaufschlagte Haltestange (2,3) mit einem quer zur Klemmkraft wirksamen Formschluss im Lager fixiert ist.

2. Fahrzeugsitz nach Anspruch 1, **dadurch gekennzeichnet, dass** das Lager einen eine Aufnahme bildenden Umfangsbereich aufweist, der die Haltestange formschlüssig aufnimmt.

3. Fahrzeugsitz nach Anspruch 1, **dadurch gekennzeichnet, dass** die Aufnahme so ausgestaltet ist, dass sie mit in Umfangsrichtung beabstandeten punkt- oder linienförmigen Berührungsstellen (38,138) mit der Umfangsfläche der Haltestange (2,3) zusammenwirkt.

4. Fahrzeugsitz nach einem der Ansprüche 1 bis 3, **dadurch gekennzeichnet, dass** eine handbetätigte Arretiereinrichtung zum Fixieren der Kopfstütze (1) in unterschiedlichen Höhenpositionen vorhanden ist, die mit dem Klemmelement (18,118,218) derart bewegungsgekoppelt ist, dass die Arretierung der Haltestange (2,3) in der Freigabestellung des Klemmelements aufgehoben ist, und dass in der Fixierstellung des Klemmelements eine Lösung der Arretierung und eine Höhenverstellung der Kopfstütze (1) per Hand möglich ist.

5. Fahrzeugsitz nach einem der Ansprüche 1 bis 4, **dadurch gekennzeichnet, dass** das Klemmelement (18,118,218) in Fixierrichtung von einem Federelement beaufschlagt und in Gegenrichtung von einem Stellantrieb betätigt ist.

6. Fahrzeugsitz nach einem der Ansprüche 1 bis 5, **dadurch gekennzeichnet, dass** die Kopfstütze (1) eine mittel- oder unmittelbar mit der ersten Haltestange (2) verbundene zweite Haltestange (3) aufweist und dass zumindest eine Haltestange (2) in Querrichtung (15), also in einer quer zur Fahrzeuglängsrichtung (16) verlaufenden Richtung, von einem Klemmelement (18,118) mit einer Klemmkraft (F) beaufschlagt ist.

7. Fahrzeugsitz nach Anspruch 6, **dadurch gekennzeichnet, dass**, eine Haltestange mit dem Klemmelement (18,118) derart beaufschlagt ist, dass sich beide Haltestangen (2,3) unter Veränderung ihres Abstandes elastisch verformen.

8. Fahrzeugsitz nach Anspruch 6 oder 7, **dadurch gekennzeichnet, dass** zwischen einem Klemmelement (18,118) in der Fixierstellung und einer Haltestange (2,3) ein in Fahrzeuglängsrichtung wirksamer Formschluss vorhanden ist.

9. Fahrzeugsitz nach Anspruch 8, **dadurch gekennzeichnet, dass** die mit der Umfangsfläche der Haltestange (2,3) zusammenwirkende Fläche des Klemmelements (18,118) konkav gekrümmt ist, wodurch eine Aufnahme (51) für die Haltestange (2,3) gebildet ist.

10. Fahrzeugsitz nach einem der Ansprüche 6 bis 9, **dadurch gekennzeichnet, dass** das Federelement eine Blattfeder (23) ist, deren eines Ende ortsfest fixiert und deren anderes Ende mit dem Klemmelement (18) verbunden ist, und dass der Stellantrieb ein an einer Flachseite der Blattfeder (23) angeordnetes Luftkissen (24) mit steuerbarem Befüllungsgrad ist, mit dem die Krümmung der Blattfeder veränderbar ist.

11. Fahrzeugsitz nach einem der Ansprüche 6 bis 9, **dadurch gekennzeichnet, dass** das Federelement und der Stellantrieb Teile einer Pneumatikdose (49) sind.

12. Fahrzeugsitz nach einem der Ansprüche 6 bis 9, **dadurch gekennzeichnet, dass** jeder Haltestange (2,3) ein Klemmelement (118) zugeordnet ist, wobei die Haltestangen in der Fixierstellung in gegensinnigen Richtungen mit einer Klemmkraft beaufschlagt sind.

13. Fahrzeugsitz nach Anspruch 12, **dadurch gekennzeichnet, dass** die Klemmelemente (118) und ein ihnen zugeordneter gemeinsamer Stellantrieb zwischen den Haltestangen (2,3) angeordnet sind.

14. Fahrzeugsitz nach Anspruch 13, **dadurch gekennzeichnet, dass** die beiden Klemmelemente (118) über ein Kniehebelgetriebe (58) mit dem Stellantrieb verbunden sind.

15. Fahrzeugsitz nach einem der Ansprüche 1 bis 5, **dadurch gekennzeichnet, dass** eine Haltestange (2) in einem oberen und einem unteren Lager geführt ist und dass ein Klemmelement (218) in der Fixierstellung eine Haltestange (2) an einer unterhalb der Lager gelegenen Stelle in Fahrtrichtung (62) mit einer Klemmkraft (F) beaufschlagt, wobei die Haltestange (2)
- mit einem in Fahrtrichtung (62) weisenden Umfangsbereich in einer Aufnahme (68) des unteren Lagers, und
- mit einem gegen die Fahrtrichtung weisenden Umfangsbereich in einer Aufnahme (67) des oberen Lagers einliegt.

16. Fahrzeugsitz nach Anspruch 15, **dadurch gekennzeichnet, dass** ein Klemmelement (218) von einem Hebelarm (63) gebildet ist, welcher um eine in Querrichtung (15) verlaufende Achse (64) schwenkbar ist und mit seinem nach unten weisenden Freiende (65) mit einer Haltestange (2,3) zusammenwirkt.

17. Fahrzeugsitz nach Anspruch 15 oder 16, **dadurch gekennzeichnet, dass** die Kopfstütze (1) eine zweite Haltestange (3) aufweist, die entsprechend der ersten Haltestange (2) fixiert und geführt ist, wobei jedoch die Aufnahmen (67a,68a) der Lager so gestaltet sind, dass sie ein Spiel der zweiten Haltestange (3) in Querrichtung (15) ermöglichen.

18. Fahrzeugsitz nach Anspruch 17, **dadurch gekennzeichnet, dass** die Aufnahmen (67a,68a) eine sich Querrichtung (15) erstreckende Planfläche (72) aufweisen.

19. Fahrzeugsitz nach Anspruch 17 oder 18, **dadurch gekennzeichnet, dass** an die Klemmelemente (218) ein sich in Fahrtrichtung (62) weg erstreckenden Ausleger (73) angeformt ist, der mit einem Stellantrieb nach unten schwenkbar ist.

20. Fahrzeugsitz nach Anspruch 19, **dadurch gekennzeichnet, dass** die Freienden der Ausleger (73) miteinander über ein Brückenteil (74) in Verbindung stehen, welches mit dem Stellantrieb verbunden ist.

## Claims

1. Vehicle seat with a headrest (1) which is guided in a height-adjustable manner by means of at least one first holding bar (2, 3) in a bearing provided on a supporting structure (6) fixed within a seat back (5), **characterized in that**
- the bearing surrounds the holding bar (2, 3) with radial play (17), and there is a clamping element which is movable between a fixing position and a release position by a remote-controlled drive,
- in the fixing position, the clamping element (18, 118, 218) acts upon the holding bar (2, 3) transversely with respect to the longitudinal direction (33) thereof with a clamping force (F), as a result of which the holding bar (2, 3) is pressed with a circumferential region of its circumferential surface against the bearing,
- the bearing is configured in such a manner that the holding bar (2, 3) which is acted upon with a clamping force (F) is fixed in the bearing by a form-fitting connection which is effective transversely with respect to the clamping force.

2. Vehicle seat according to Claim 1, **characterized in that** the bearing has a circumferential region which forms a receptacle and which receives the holding bar in a form-fitting manner.

3. Vehicle seat according to Claim 1, **characterized in that** the receptacle is configured in such a manner that it interacts with the circumferential surface of the holding bar (2, 3) by means of punctiform or linear contact points (38, 138) spaced apart in the circumferential direction.

4. Vehicle seat according to one of Claims 1 to 3, **characterized in that** there is a manually actuated locking device for fixing the head rest (1) in different height positions, said locking device being coupled in terms of movement to the clamping element (18, 118, 218) in such a manner that, in the release position of the clamping element, the holding bar (2, 3) is released, and **in that**, in the fixing position of the clamping element, the locking can be released and the head rest (1) can be adjusted in height by hand.

5. Vehicle seat according to one of Claims 1 to 4, **characterized in that** the clamping element (18, 118, 218) is acted upon in the fixing direction by a spring element and is actuated in the opposite direction by an actuator.

6. Vehicle seat according to one of Claims 1 to 5, **characterized in that** the headrest (1) has a second holding bar (3) connected indirectly or directly to the first holding bar (2), and **in that** at least one holding bar (2) is acted upon by a clamping element (18, 118) with a clamping force (F) in the transverse direction (15), i.e. in a direction running transversely with respect to the longitudinal direction (16) of the vehicle.

7. Vehicle seat according to Claim 6, **characterized in that** one holding bar is acted upon by the clamping element (18, 118) in such a manner that both holding bars (2, 3) are elastically deformed with the distance from each other being changed.

8. Vehicle seat according to Claim 6 or 7, **characterized in that** there is a form-fitting connection which is effective in the longitudinal direction of the vehicle between a clamping element (18, 118) in the fixing position and a holding bar (2, 3) .

9. Vehicle seat according to Claim 8, **characterized in that** the surface of the clamping element (18, 118) which interacts with the circumferential surface of the holding bar (2, 3) is curved concavely, thus forming a receptacle (51) for the holding bar (2, 3).

10. Vehicle seat according to one of Claims 6 to 9, **characterized in that** the spring element is a leaf spring (23), one end of which is fixed in a fixed position and the other end of which is connected to the clamping element (18), and **in that** the actuator is an air cushion (24) which is arranged on a flat side of the leaf spring (23), has a controllable degree of filling and with which the curvature of the leaf spring can be changed.

11. Vehicle seat according to one of Claims 6 to 9, **characterized in that** the spring element and the actuator are parts of a pneumatic box (49).

12. Vehicle seat according to one of Claims 6 to 9, **characterized in that** each holding bar (2, 3) is assigned a clamping element (118), with the holding bars being acted upon with a clamping force in opposite directions in the fixing position.

13. Vehicle seat according to Claim 12, **characterized in that** the clamping elements (118) and a common actuator assigned thereto are arranged between the holding bars (2, 3).

14. Vehicle seat according to Claim 13, **characterized in that** the two clamping elements (118) are connected to the actuator via a toggle lever mechanism (58).

15. Vehicle seat according to one of Claims 1 to 5, **characterized in that** one holding bar (2) is guided in an upper and a lower bearing, and **in that**, in the fixing position, one clamping element (218) acts upon one holding bar (2), at a point located below the bearings, with a clamping force (F) in the direction of travel (62), the holding bar (2)
- lying with a circumferential region facing in the direction of travel (62) in a receptacle (68) of the lower bearing, and
- lying with a circumferential region facing counter to the direction of travel in a receptacle (67) of the upper bearing.

16. Vehicle seat according to Claim 15, **characterized in that** one clamping element (218) is formed by a lever arm (63) which is pivotable about an axis (64) running in the transverse direction (15) and, at its downwardly pointing free end (65), interacts with one holding bar (2, 3).

17. Vehicle seat according to Claim 15 or 16, **characterized in that** the headrest (1) has a second holding bar (3) which is fixed and guided in a manner corresponding to the first holding bar (2), but the receptacles (67a, 68a) of the bearings are designed in such a manner that they permit a degree of play of the second holding bar (3) in the transverse direction (15).

18. Vehicle seat according to Claim 17, **characterized in that** the receptacles (67a, 68a) have a plane surface (72) extending in the transverse direction (15).

19. Vehicle seat according to Claim 17 or 18, **characterized in that** an extension arm (73) is integrally formed on the clamping elements (218), the extension arm extending away in the direction of travel (62) and being pivotable downwards by an actuator.

20. Vehicle seat according to Claim 19, **characterized in that** the free ends of the extension arms (73) are connected to one another via a bridge part (74) which is connected to the actuator.

## Revendications

1. Siège de véhicule ayant un appui-tête (1) qui est guidé d'une manière réglable en hauteur par au moins une première barre (2, 3) de maintien dans un palier présent sur une structure (6) porteuse immobilisée sur un dossier (5) de siège, **caractérisé en ce que**
- le palier entoure la tige (2, 3) de maintien avec jeu (17) radial et il y a un élément de serrage pouvant être déplacé par un entraînement télécommandé entre une position d'immobilisation et une position de libération,
- l'élément (18, 118, 218) de serrage applique, dans la position d'immobilisation, à la barre (2, 3) de maintien une force (F) de serrage transversalement à la direction (33) longitudinale de la barre de sorte que la barre (2, 3) de maintien est poussée sur le palier par une partie de sa surface de pourtour,
- le palier est tel que la barre (2, 3) de maintien soumise à une force (F) de serrage est immobilisée dans le palier par une complémentarité de forme agissant transversalement à la force de serrage.

2. Siège de véhicule suivant la revendication 1, **caractérisé en ce que** le palier a une partie de pourtour formant un logement, qui reçoit la barre de maintien à complémentarité de forme.

3. Siège de véhicule suivant la revendication 1, **caractérisé en ce que** le logement est tel qu'il coopère avec la surface de pourtour de la barre (2, 3) de maintien par des points (38, 138) de contact ponctuels ou linéaires à distance dans la direction du pourtour

4. Siège de véhicule suivant l'une des revendications 1 à 3, **caractérisé en ce qu'**il y a un dispositif de blocage pouvant être actionné à la main pour immobiliser l'appui-tête (1) dans des positions en hauteur différentes, dispositif de blocage qui est couplé en mouvement à l'élément (18, 118, 218) de serrage de façon à ce que le blocage de la barre (2, 3) de maintien soit supprimé dans la position de libération de l'élément de serrage et de façon à ce que, dans la position d'immobilisation de l'élément de serrage, on puisse mettre fin au blocage et qu'un réglage en hauteur de l'appui-tête (1) à la main soit rendu possible.

5. Siège de véhicule suivant l'une des revendications 1 à 4, **caractérisé en ce que** l'élément (18, 118, 218) de serrage est soumis dans le sens d'immobilisation à un élément à ressort et est actionné dans le sens inverse par un entraînement de réglage.

6. Siège de véhicule suivant l'une des revendications 1 à 5, **caractérisé en ce que** l'appui-tête (1) a une deuxième barre (3) de maintien, reliée directement ou indirectement à la première barre (2) de maintien et **en ce qu'**au moins une barre (2) de maintien est soumise dans la direction (15) transversale, donc dans une direction s'étendant transversalement à la direction (16) longitudinale du véhicule, à une force (F) de serrage par l'élément (18, 118) de serrage.

7. Siège de véhicule suivant la revendication 6, **caractérisé en ce qu'**une barre de maintien est soumise à l'élément (18, 118) de serrage de façon à ce que deux barres (2, 3) de maintien se déforment élastiquement avec modification de leur distance.

8. Siège de véhicule suivant la revendication 6 ou 7, **caractérisé en ce qu'**il y a, entre un élément (18, 118) de serrage à la position d'immobilisation et une barre (2, 3) de maintien, une complémentarité de forme efficace dans la direction longitudinale du véhicule.

9. Siège de véhicule suivant la revendication 8, **caractérisé en ce que** la surface de l'élément (18, 118) de serrage, coopérant avec la surface de pourtour de la barre (2, 3) de maintien, est concave en formant ainsi un logement (51) pour la barre (2, 3) de maintien.

10. Siège de véhicule suivant l'une des revendications 6 à 9, **caractérisé en ce que** l'élément à ressort est un ressort (23) à lame, dont l'une des extrémités est immobilisée à poste fixe et dont l'autre extrémité est reliée à l'élément (18) de serrage et **en ce que** l'entraînement de réglage est un coussin (24) d'air, qui est disposé sur une côté plat du ressort (23) à lame et qui a un degré de remplissage réglable par lequel la courbure du ressort à lame peut être modifiée.

11. Siège de véhicule suivant l'une des revendications 6 à 9, **caractérisé en ce que** l'élément à ressort et l'entraînement de réglage font partie d'une boîte (49) pneumatique.

12. Siège de véhicule suivant l'une des revendications 6 à 9, **caractérisé en ce que** à chaque barre (2, 3) de maintien est associé un élément (118) de serrage, les barres de maintien étant soumises dans la position d'immobilisation à une force de serrage dans des sens opposés.

13. Siège de véhicule suivant la revendication 12, **caractérisé en ce que** les éléments (118) de serrage et un entraînement de réglage commun qui leur est associé sont disposés entre les barres (2, 3) de maintien.

14. Siège de véhicule suivant la revendication 13, **caractérisé en ce que** les deux éléments (118) de serrage sont reliés à l'entraînement de réglage par une transmission (58) à levier coudé.

15. Siège de véhicule suivant l'une des revendications 1 à 5, **caractérisé en ce qu'**une barre (2) de maintien est guidée dans un palier supérieur ou dans un palier inférieur et **en ce qu'**un élément (218) de serrage applique, dans la position d'immobilisation, une barre (2) de maintien en un point se trouvant en dessous du palier dans la direction (62) de déplacement, une force (F) de serrage, la barre (2) de maintien
- pénétrant par une zone de pourtour, tournée dans le sens (62) du trajet, dans un logement (68) du palier inférieur, et
- par une partie de pourtour, tournée dans le sens contraire de déplacement, dans un logement (67) du palier supérieur.

16. Siège de véhicule suivant la revendication 15, **caractérisé en ce qu'**un élément (218) de serrage est formé par un bras (63) de levier, qui peut pivoter autour d'un axe (64) s'étendant dans la direction (15) transversale et qui coopère par son extrémité (65) libre tournée vers le bas avec une barre (2, 3) de maintien.

17. Siège de véhicule suivant la revendication 15 ou 16, **caractérisé en ce que** l'appui-tête (1) a une deuxième barre (3) de maintien, qui est immobilisée et guidée de la même façon que la première barre (2) de maintien, les logements (67a, 68a) des paliers étant toutefois tels qu'ils permettant d'avoir un jeu de la deuxième barre (3) de maintien dans la direction (15) transversale.

18. Siège de véhicule suivant la revendication 17, **caractérisé en ce que** les logements (67a, 68a) ont une surface (72) plane s'étendant dans une direction (15) transversale.

19. Siège de véhicule suivant la revendication 17 ou 18, **caractérisé en ce que** sur l'élément (218) de serrage est formé un bras (73) s'éloignant dans le sens (62) du trajet et pouvant pivoter vers le bas sous l'effet d'un entraînement de réglage.

20. Siège de véhicule suivant la revendication 19, **caractérisé en ce que** les extrémités libres du bras (73) sont reliées entre elles par une partie (74) de pont, qui est reliée à l'entraînement de réglage.
